(19)

Europäisches Patentamt
European Patent Office
Office européen des brevets

(11) **EP 2 472 872 A1**

(12) **EUROPEAN PATENT APPLICATION**
published in accordance with Art. 153(4) EPC

(43) Date of publication:
**04.07.2012 Bulletin 2012/27**

(51) Int Cl.:
*H04N 7/50* (2006.01)

(21) Application number: **10811653.4**

(22) Date of filing: **30.07.2010**

(86) International application number:
**PCT/JP2010/062889**

(87) International publication number:
**WO 2011/024602 (03.03.2011 Gazette 2011/09)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **26.08.2009 JP 2009194961**

(71) Applicant: **Sharp Kabushiki Kaisha**
**Osaka-shi, Osaka 545-8522 (JP)**

(72) Inventor: **IKAI, Tomohiro**
**Osaka-shi**
**Osaka 545-8522 (JP)**

(74) Representative: **Müller - Hoffmann & Partner**
**Patentanwälte**
**Innere Wiener Strasse 17**
**81667 München (DE)**

(54) **IMAGE ENCODING DEVICE AND IMAGE DECODING DEVICE**

(57)     Disclosed is an image encoding device that aims to increase encoding efficiency and to increase mode estimation accuracy using the characteristics of transformation coefficients. In response to an assessment value calculated on the basis of the characteristics of transformation coefficients, the range of estimated modes and selectable modes is limited, a mode that minimizes encoding cost is selected from among predetermined modes within the limited range of modes, when the number of the aforementioned limited modes is one, a flag for mode identification is not encoded, and when there are a plurality of modes, the aforementioned selected mode is encoded. As a result, the amount of encoding cost of the mode-identifying flag is decreased and encoding can be performed with a high encoding efficiency, mode estimation accuracy is increased, and furthermore, the amount of flag encoding is decreased and encoding efficiency is increased.

FIG. 1

EP 2 472 872 A1

**Description**

TECHNICAL FIELD

The present invention relates to an image encoding device that encodes an image to output encoded data, and an image decoding device that decodes code data encoded by the encoding device.

BACKGROUND ART

The image encoding techniques are applied to various familiar video equipment including from a television receiver to a cellular phone capable of image processing.

In the field of the image encoding techniques, generally, image data (image information) is divided into a plurality of blocks and the encoding is carried out on the divided block-to-block basis. In the block-based encoding, encoding processes are performed that include generation of a prediction signal close to an input signal, calculation of a residual signal indicative of a difference between the input signal and the prediction signal, transform of the residual signal calculated, quantization of a transform coefficient obtained by the transform, scan (scanning) of the transform coefficient quantized, and variable-length encoding of the transform coefficient quantized and scanned.

The variable-length encoding process encodes, in addition to the transform coefficient, information indicative of a prediction signal generation method.

The prediction signal generation method includes an intra-screen prediction using, for generation, a regeneration image around an object block, and an inter-screen prediction using, for generation, a regeneration image of an already encoded/decoded frame.

The intra-frame prediction has a plurality of prediction modes such as a DC prediction, a horizontal prediction, and a vertical prediction, in which encoded as a flag is information indicative of which prediction mode is to be used.

In the inter-frame prediction, encoded by a flag are a frame ID for specifying a reference frame to be used in a prediction, and a position and motion vector in a frame are encoded by a flag.

In this description, information indicative of a method selected from a plurality of method (mode) candidates is referred to as "flag". The flag encoding methods can be the following ones, for example, a method (2) is used for encoding the prediction mode in the intra-frame prediction, and a method (3) is used for encoding the motion vector in the inter-frame prediction as a difference from the prediction vector.

(1) Method of encoding directly.
(2) Method of encoding information indicative of whether the prediction is right or not and information for identification used when the prediction is wrong.
(3) Method of encoding a difference from a prediction value.

Technique of selecting an optimum method from a plurality of prepared methods (modes) and encoding a flag for mode identification is common, and it is used for scan method, transform method, and variable-length encoding table, etc., besides the prediction mode.

Technique of determining a mode to be applied using already encoded/decoded information without explicitly encoding the flag is also known. The reason that the explicitly encoding the flag is not performed is that the flag encoding may adversely bring about a reduction of encoding efficiency when the amount of flag code is large.

Patent Literature 1 discloses a technique of determining using a prediction image without explicitly encoding a flag indicative a scan method. For example, comparison is made between horizontal edges and vertical edges of a prediction image, and if more horizontal edges are contained than the vertical edges, then a scan method giving priority to the horizontal direction is employed, whereas if more vertical edges are contained than the horizontal edges, then a scan method giving priority to the vertical direction is employed.

A video encoding device creates a determination equation for determining which is more contained between the vertical edges and the horizontal edges and stores it in an encoding stream, while a video decoding device performs decoding using a scan method determined by the determination equation stored in the encoding stream.

Patent Literature 2 discloses a technique of determining a transform method using encoded data already decoded, without explicitly encoding a flag indicative of the transform method. That is, the transform method is determined based on a quantization parameter included in the encoded data, an encoding mode, and information on the number of motion vectors.

Disclosed in Non Patent Literature 1 is a technique of reducing the code amount of a motion vector that is an inter-screen prediction flag, where the flag code amount is reduced by taking a matching between a block in a reference frame and a residual signal decoded by an inverse quantization and an inverse transform of a decoded transform coefficient to consequently estimate the motion vector.

PRIOR ART DOCUMENTS

PATENT DOCUMENTS

Patent Document 1: Japanese Laid-Open Patent Publication No. 2006-211304
Patent Document 2: Japanese Laid-Open Patent Publication No. 2003-204550

NON PATENT DOCUMENT

Non Patent Document 1: Ryuichi TANIDA, et.al (NTT), "A STUDY ON PREDICTION VECTOR DERIVATION ALGORITHM USING IMAGE MATCHING", 2008 IMAGE CODING SYMPOSIUM, pp.5-10

SUMMARY OF THE INVENTION

PROBLEM TO BE SOLVED BY THE INVENTION

In Patent Documents 1 and 2, an estimated mode is used without explicitly encoding a flag indicative a scan method and a transform method. In these methods, however, dissimilar to the method of explicitly encoding a flag, the mode determined by the estimation may be improper, resulting in an increased code amount.

In spite of the presence of a certain relationship between the features (e.g., the number of transform coefficients) and the effects occurring when the mode is changed, the methods of Patent Literatures 1 and 2 fail in making the most of such a property.

For example, although the scan order changing effect is large when the number of the transform coefficients is large, this property is not utilized. Although it is conceivable that the probability of success of the estimation in the scan method or the prediction method may differ depending on the number of the transform coefficients, this property is not utilized either since the estimation method is not changed in accordance with the feature of the transform coefficient.

In Non Patent Literature 1, use is made of information on a transform coefficient for an object block to estimate a motion vector, to thereby figure out a highly accurate prediction vector to reduce the code amount of the motion vector. Although this technique takes the features of the transform coefficients into consideration, the motion vector estimation using a residual signal is effective only when the number of the transform coefficients is particularly large.

Its computation load is extremely high since the decoding device performs the matching using information obtained from the transform coefficients.

Thus, in the conventional encoding technique, the mode estimation accuracy is low and the encoding efficiency is also low due to the mode estimation not using the features of the transform coefficients.

Due to the mode determination not using the features of the transform coefficients, the mode is restricted to an estimated one even when the mode change effect is large, resulting in a lowering of the encoding efficiency. Even when the mode change effect is small, a flag for identifying a mode to be used is encoded, resulting in a lowering of the encoding efficiency.

The present invention was conceived in view of the above circumstances, and it is an object thereof to provide an image encoding device and an image decoding device aiming at an improvement in the mode estimation accuracy and an improvement in the encoding efficiency by using the features of the transform coefficients.

MEANS FOR SOLVING THE PROBLEM

In order to solve the above problem, an image encoding device of the present invention is an image encoding device for generating encoded data, having a predicting portion that divides an input signal into blocks to generate a prediction signal of the input signal for each of the blocks, a transforming portion that transforms a residual signal between the input signal and the prediction signal to calculate a transform coefficient, a quantizing portion that quantizes the transform coefficient, a scanning portion that aligns the quantized transform coefficient one-dimensionally, and a variable-length encoding portion that encodes the scanned transform coefficient, wherein the image encoding device includes any one of configurations (1) to (3) below.

(1) The image encoding device of the present invention includes a transform coefficient evaluating portion that calculates an evaluation value based on a feature of the transform coefficient; a mode estimating portion that, depending on the evaluation value, estimates a mode used by the predicting portion or the transforming portion or the scanning portion; a mode restricting portion that, depending on the evaluation value, restricts a range of selectable modes used by the predicting portion or the transforming portion or the scanning portion; and a mode selecting portion that selects a mode minimizing an encoding cost from among predetermined modes falling within the range of the selectable modes, and the mode selecting portion, in response to the input signal, operates the predicting portion, the transforming portion, the quantizing portion, the scanning portion, and the variable-length encoding portion while switching the predetermined modes used by the predicting portion or the transforming portion or the scanning portion, the mode selecting portion selecting a mode minimizing the encoding cost by use of the evaluation value calculated by the transform coefficient evaluating portion, and wherein the variable-length encoding portion encodes a flag for identifying the mode used by the predicting portion or the transforming portion or the scanning portion if the number of the restricted modes is more than one.

(2) The image encoding device of the present invention includes a transform coefficient evaluating portion that calculates an evaluation value based on a feature of the transform coefficient; a mode restricting portion that, depending on the evaluation value, restricts a range of selectable modes used by the predicting portion or the transforming portion or th scanning portion; and a mode selecting portion that selects a mode minimizing an encoding cost from among predetermined modes falling within the range of the selectable modes, and the mode selecting portion, in response to the input signal, operates the predicting portion, the transforming portion, the quantizing portion, the scanning portion, and the variable-length encoding portion while switching the predetermined modes used by the predicting portion or the transforming portion or the scanning portion, the mode selecting portion selecting a mode minimizing the encoding cost by use of the evaluation value calculated by the transform coefficient evaluating portion, and wherein the variable-length encoding portion encodes a flag for identifying the mode used by the predicting portion or the transforming portion or the scanning portion.

(3) The image encoding device of the present invention includes a transform coefficient evaluating portion that calculates an evaluation value based on a feature of the transform coefficient; a mode estimating portion that, depending on the evaluation value, estimates a mode used by the predicting portion or the transforming portion or the scanning portion; and a mode selecting portion that selects a mode minimizing an encoding cost from among predetermined modes, and the mode selecting portion, in response to the input signal, operates the predicting portion, the transforming portion, the quantizing portion, the scanning portion, and the variable-length encoding portion while switching the predetermined modes used by the predicting portion or the transforming portion or the scanning portion, the mode selecting portion selecting a mode minimizing the encoding cost by use of the evaluation value calculated by the transform coefficient evaluating portion, and the variable-length encoding portion, if the estimated mode and the selected mode are identical, encoding information that the estimated mode is used, but if different, encoding a flag for identifying a mode used by the predicting portion or the transforming portion or the scanning portion and information that the estimated mode is not used.

An image decoding device of the present invention is an image decoding device for decoding encoded data from a residual signal and a prediction signal, the encoded data acquired by dividing an input signal into blocks and, for each of the blocks, one-dimensionally aligning transformed and quantized transform coefficients to perform encoding, the residual signal acquired by subjecting the encoded data to inverse scanning by an inverse scanning portion, inverse quantization by an inverse quantizing portion, and an inverse transform by an inverse transforming portion, the prediction signal acquired by prediction from an already decoded signal by a predicting portion, wherein the image decoding device includes any one of configurations (4) to (6) below.

(4) The image decoding device of the present invention includes a variable-length decoding portion that decodes the transform coefficient from the encoded data, and a flag for identifying a mode used by the predicting portion or the inverse transforming portion or the inverse scanning portion; a transform coefficient evaluating portion that calculates an evaluation value based on a feature of the transform coefficient; a mode estimating portion that, in accordance with the evaluation value, estimates a mode used by the predicting portion or the inverse transforming portion or the inverse scanning portion; a mode restricting portion that, in accordance with the evaluation value, restricts a range of selectable modes used by the predicting portion or the inverse transforming portion or the inverse scanning portion; and a mode decoding portion that sets the mode used by the predicting portion or the inverse transforming portion or the inverse scanning portion to a mode estimated by the mode estimating portion if the number of the restricted modes is 1 and to a mode identified by the flag if it is more than 1, and decodes the encoded data by operating the predicting portion or the inverse transforming portion or the inverse scanning portion using the mode decoded by the mode decoding portion.

(5) The image decoding device of the present invention includes a variable-length decoding portion that decodes the transform coefficient from the encoded data, and a flag for identifying a mode used by the predicting portion or the inverse transforming portion or the inverse scanning portion; a transform coefficient evaluating portion that calculates an evaluation value based on a feature of the transform coefficient; a mode restricting portion that restricts a range of modes used by the predicting portion or the inverse transforming portion or the inverse scanning portion; and a mode decoding portion that sets the mode used by the predicting portion or the inverse transforming portion or the inverse scanning portion to a mode falling within the range restricted by the mode restricting portion if the number of the restricted modes is 1 and to a mode identified by the flag if it is more than 1, and decodes the encoded data by operating the predicting portion or the inverse transforming portion or the inverse scanning portion using the mode decoded by the mode decoding portion.

(6) The image decoding device of the present invention includes a variable-length decoding portion that decodes the transform coefficient from the encoded data, information of whether an estimated mode is used, and a flag for identifying a mode used by the predicting portion or the inverse transforming portion or the inverse scanning portion; a transform coefficient evaluating portion that calculates an evaluation value based on a feature of the transform coefficient; a mode estimating portion that, in accordance with the evaluation value, estimates a mode used by the predicting portion or the inverse transforming portion or the inverse scanning portion; and a mode decoding portion that sets the mode used by the predicting portion or the inverse transforming portion or the inverse scanning portion to a mode estimated by the mode estimating portion if information is decoded that the estimated mode is used and to a mode identified by the flag if information is decoded that the estimated mode is not used, and decodes the encoded data by operating the predicting portion or the inverse transforming portion or the inverse scanning portion using the mode decoded by the mode decoding portion.

In the image encoding device of (1) to (3) above or in the image decoding device of (4) to (6) above, the evaluation value of the transform coefficient evaluating portion is any one of a value indicative of whether the transform coefficient other than zero is present, a number of the transform coefficients other than zero, a length of consecutive zeros of the transform coefficients, a magnitude of the quantized transform coefficient, an encoding cost when encoding the transform coefficients, a dispersion of the transform coefficients, an encoding efficiency calculated based on the magnitude of the quantized transform coefficient, and a value indicative of whether the transform coefficient of a minimum order is 0; a value calculated from a predetermined function using these values; or a combination thereof used for the mode estimation or the mode restriction.

The mode restricting portion of the image encoding device of (1) or (2) above or of the image decoding device of (4) or (5) above: (7) sets the range of the selectable modes to be smaller when the evaluation value is more than a predetermined value than when it is less than or equal to the predetermined value; or (8) has a second predetermined value larger than a first predetermined value and sets the range of the selectable modes when the evaluation value is less than or equal to the first predetermined value and when it is more than the second predetermined value to be smaller than the range of the selectable modes when the evaluation value is more than the first predetermined value and less than and equal to the second predetermined value.

The mode estimating portion of the image encoding device of (1) or (3) above or of the image decoding device of (4) or (6) above: estimates a mode based on a mode of an already regenerated block or on a pixel value of the already regenerated block when the evaluation value is less than or equal to a predetermined value, and uses a predetermined mode when the evaluation value is more than the predetermined value.

EFFECT OF THE INVENTION

According to the present invention, the selectable options of modes are restricted depending on the features of the transforms coefficients, whereby the flag code amount required for the mode representation is reduced with an improved encoding efficiency.
Furthermore, by virtue of the mode estimation depending on the features of the transform coefficients, the mode estimation accuracy is heightened with an improved encoding efficiency.

BRIEF DESCRIPTION OF DRAWINGS

[Fig. 1] Fig. 1 is a block diagram depicting a configuration of an image encoding device according to a first embodiment of the present invention.
[Fig. 2] Fig. 2 is a diagram explaining scan methods of the first and a second embodiment of the present invention.
[Fig. 3] Fig. 3 is a block diagram depicting a configuration of a mode estimating portion that estimates a mode based on an occurrence frequency in the first and the second embodiment of the present invention.
[Fig. 4] Fig. 4 is a block diagram depicting another configuration of the mode estimating portion that estimates a mode based on the occurrence frequency in the first and the second embodiment of the present invention.
[Fig. 5] Fig. 5 is a diagram explaining a method of generating a scan mode based on the occurrence frequency.
[Fig. 6] Fig. 6 is a diagram explaining a mode restricting portion according to the first and a fifth embodiment of the present invention.
[Fig. 7] Fig. 7 is a flowchart explaining behavior of a mode selecting portion according to the first embodiment of the present invention.
[Fig. 8] Fig. 8 is a diagram depicting a configuration of conventional encoded data.
[Fig. 9] Fig. 9 is a diagram depicting a configuration of encoded data of the present invention.
[Fig. 10] Fig. 10 is a flowchart explaining behavior of a mode selecting portion of a first variant according to the first embodiment of the present invention.
[Fig. 11] Fig. 11 is a flowchart explaining behavior of the mode selecting portion of a second variant according to the first embodiment of the present invention.
[Fig. 12] Fig. 12 is a block diagram depicting a configuration of an image decoding device according to a second embodiment of the present invention.
[Fig. 13] Fig. 13 is a flowchart explaining behavior of the image decoding device according to the second embodiment of the present invention.
[Fig. 14] Fig. 14 is a flowchart explaining behavior of a third variant according to the second embodiment of the present invention.
[Fig. 15] Fig. 15 is a flowchart explaining behavior of a fourth variant according to the second embodiment of the present invention.
[Fig. 16] Fig. 16 is a block diagram depicting a configuration of an image encoding device according to a third embodiment of the present invention.
[Fig. 17] Fig. 17 is a block diagram depicting a configuration of a mode estimating portion that estimates a mode based on an occurrence frequency in the third and a fourth embodiment of the present invention.
[Fig. 18] Fig. 18 is a flowchart explaining behavior of a mode selecting portion according to the third embodiment of the present invention.

[Fig. 19] Fig. 19 is a block diagram depicting a configuration of an image decoding device according to the fourth embodiment of the present invention.

[Fig. 20] Fig. 20 is a block diagram depicting a configuration of an image encoding device according to a fifth embodiment of the present invention.

[Fig. 21] Fig. 21 is a diagram explaining a directional prediction and a block prediction.

[Fig. 22] Fig. 22 is a diagram explaining a function prediction and a matching prediction.

[Fig. 23] Fig. 23 is a flowchart explaining behavior of a mode estimating portion according to the fifth and a sixth embodiment of the present invention.

[Fig. 24] Fig. 24 is a flowchart explaining other behavior of the mode estimating portion according to the fifth and the sixth embodiment of the present invention.

[Fig. 25] Fig. 25 is a flowchart explaining behavior of a mode selecting portion according to the fifth embodiment of the present invention.

[Fig. 26] Fig. 26 is a flowchart explaining other behavior of the mode selecting portion according to the fifth embodiment of the present invention.

[Fig. 27] Fig. 27 is a block diagram depicting a configuration of an image decoding device according to the sixth embodiment of the present invention.

[Fig. 28] Fig. 28 is a block diagram explaining other behavior of the image decoding device according to the sixth embodiment of the present invention.

MODES FOR CARRYING OUT THE INVENTION

Embodiments of the present invention will now be described with reference to the accompanying drawings.

First and second embodiments are related to an image encoding device and an image decoding device in the case of selecting a scan mode, third and fourth embodiments are related to an image encoding device and an image decoding device in the case of selecting a transform mode, and fifth and sixth embodiments are related to an image encoding device and an image decoding device in the case of selecting a prediction mode.

In these cases, other modes than a mode to be selected are determined in advance.

The present invention is applicable similarly to the case of selection of the modes in any combination, instead of selecting individually the scan mode, the selection mode, and the prediction mode in this manner.

<<First Embodiment>>

In the first embodiment, description will be made of the case where the scan mode is selected for encoding. In this case, the transform system and the quantization system are determined in advance.

(Configuration of Image Encoding Device 100)

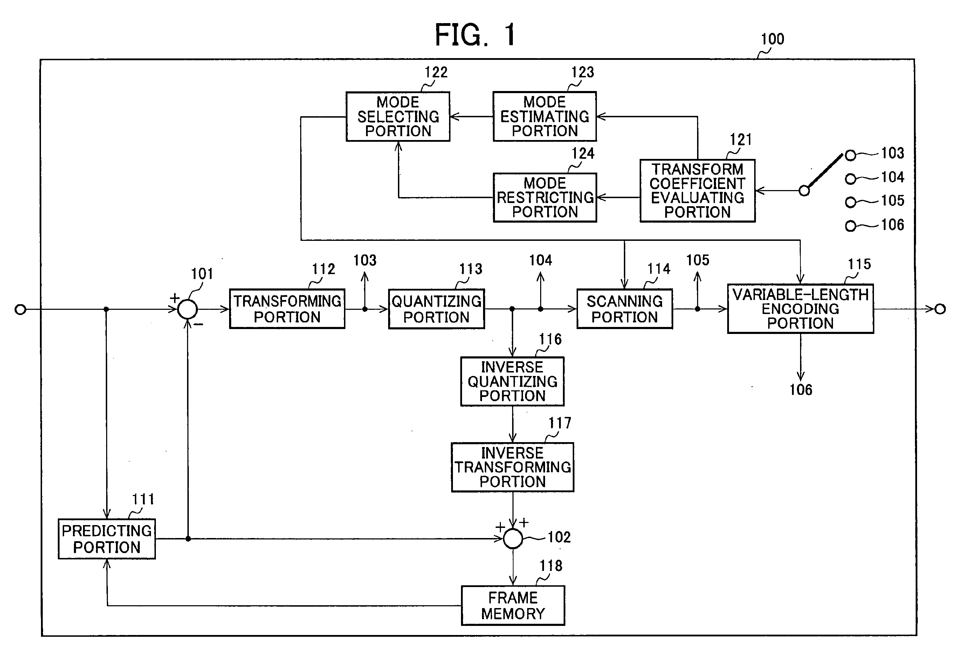

Fig. 1 is a block diagram of a configuration of an image encoding device 100 according to the first embodiment of the present invention. In the diagram, the image encoding device 100 includes a predicting portion 111, a transforming portion 112, a quantizing portion 113, a scanning portion 114, a variable-length encoding portion 115, an inverse quantizing portion 116, an inverse transforming portion 117, a frame memory 118, a transform coefficient evaluating portion 121, a mode selecting portion 122, a mode estimating portion 123, a mode restricting portion 124, a subtracting portion 101, and an adding portion 102. In the diagram, reference numeral 103 denotes a transform coefficient output from the transforming portion 112, 104 denotes a quantized transform coefficient output from the quantizing portion 113, 105 denotes a scanned transform coefficient output from the scanning portion 114, and 106 denotes information on a variable-length encoded transform coefficient output from the variable-length encoding portion 115, e.g., a code amount.

(Behavior of Image Encoding Device 100)

The image encoding device 100 decomposes an input image into blocks and, for each block, first activates the mode selecting portion 122 and then activates the transforming portion 112, the quantizing portion 113, the scanning portion 114, the variable-length encoding portion 115, the transform coefficient evaluating portion 121, the mode estimating portion 123, and the mode restricting portion 124 to select a scan mode to send the selected scan mode to the scanning portion 114 and the variable-length encoding portion 115.

The input image is then subjected to the conventional encoding processing using the selected scan mode.

The conventional encoding process is carried out through the predicting portion 111, the transforming portion 112, the quantizing portion 113, the scanning portion 114, the variable-length encoding portion 115, the inverse quantizing portion 116, the inverse transforming portion 117, the frame memory 118, the subtracting portion 101, and the adding portion 102, and hence they will be briefly described hereinbelow.

The predicting portion 111 generates a prediction signal of the input signal.

The subtracting portion 101 obtains a residual signal from a difference between the input signal and the prediction signal.

The transforming portion 112 figures out a transform coefficient for the residual signal through e.g., a DCT transform.

The quantizing portion 113 quantizes the transform coefficients. The quantized transform coefficients are, on the one hand, aligned one-dimensionally by the scanning portion 114 and encoded by the variable-length encoding portion 115. The quantized transform coefficients are, on the other hand, subjected to an inverse quantization by the inverse quantizing portion 116 and to an inverse transform by the inverse transforming portion 117, for regeneration of a residual signal.

The regenerated residual signal and the prediction signal are added together by the adding portion 120 to regenerate a locally decoded block. The regenerated locally decoded block is stored in the frame memory 118.

The constituent elements according to the present invention (the transform coefficient evaluating portion 121, the mode selecting portion 122, the mode estimating portion 123, and the mode restricting portion 124), and additional functions of the conventional constituent elements described above will then be described.

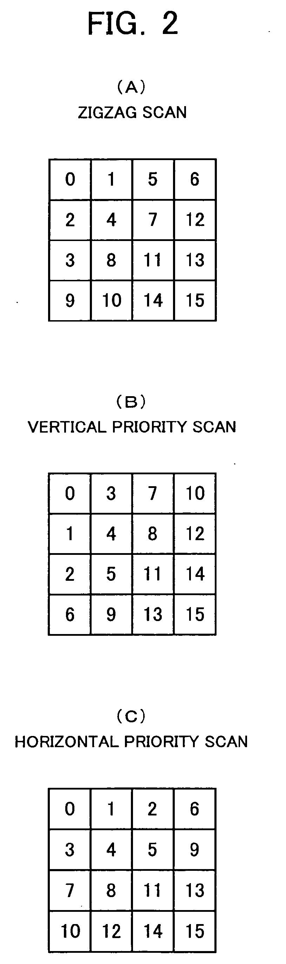

Fig. 2 is a diagram explaining scan methods for use in the present invention. Fig. 2 depicts 4x4 transform coefficients, with values 0 to 15 in the diagram representing a scan order for each position of the transform coefficients.

A vertical priority scan of Fig. 2(B) is effective for a block having a lateral pattern in which transform coefficients other than zero gather in the vertical direction, whereas a horizontal priority scan of Fig. 2 (C) is effective for a block having a longitudinal pattern in which transform coefficients other than zero gather in the horizontal direction. A zigzag scan of Fig. 2(A) is a scan of neither the vertical priority nor the horizontal priority.

The scanning portion 114 uses any one scan method (hereinafter, scan mode) selected from the zigzag scan, the vertical priority scan, and the horizontal priority scan. Selection of the scan mode is performed by the mode selecting portion 122.

It is to be noted that the scan modes are not restricted to these three modes and that other scan modes may be employed such as a scan based on the occurrence probability as will be described later. In the first embodiment, mode numbers for identifying the scan modes are the number 1 for the zigzag scan, the number 2 for the vertical direction priority, and the number 3 for the horizontal direction priority. The number 0 is a mode number for the case of using the other can modes.

(Description of Transform coefficient Evaluating Portion 121)

The transform coefficient evaluating portion 121 calculates an evaluation value xC indicative of a feature of a transform coefficient, from information on the transform coefficient using an evaluation method set in advance.

An input to the transform coefficient evaluating portion 121 differs depending on the evaluation method. In a case where the evaluation depends on the code amount, input is the code amount 106. In the case of depending on the scan method, input is the scanned transform coefficient 105. In the case of depending on the quantization method, input is the quantized transform coefficient 104. In the case of depending on the transform method, input is the transform coefficient 103.

Various calculation methods of the evaluation value xC are present, and major calculation methods will be described below.

(Method A)

The evaluation value xC is a number nC of transform coefficients other than zero within an object block.

(Method A')

The evaluation value xC is a length 1C (a value that increases according as more transform coefficients 0 align) of successive transform coefficients 0 among the one-dimensionally aligned transform coefficients.

For example, 1C indicates a maximum value of numbers of successive transform coefficients 0 among the one-dimensionally aligned transform coefficients. Alternatively, 1C represents a maximum value of numbers of successive transform coefficients 0 except the last successive transform coefficients 0 among the one-dimensionally aligned transform coefficients.

(Method B)

The evaluation value xC is a magnitude mC of the transform coefficient after quantization.

For example, mC is an absolute maximum value of the transform coefficients after quantization, or the sum of absolute values of the transform coefficients after quantization, or the sum of squares of the transform coefficients after quantization.

(Method C)

The evaluation value xC is a code amount rC in the case of coding transform coefficients within an object block.

(Method D)

The evaluation value xC is a variance vC of the transform coefficients.

For example, vC is a dispersion of the transform coefficients within an object block, or a standard deviation of the transform coefficients within an object block.

(Method E)

The evaluation value xC is an encoding efficiency eC that is calculated from the magnitude mC of the transform coefficients after quantization and the number nC of transform coefficients other than zero.

Although the residual signal is a signal that is obtained by subjecting the transform coefficients to the inverse quantization and the inverse transform, if less nC can represent a more residual energy, then the method can be regarded to have a high encoding efficiency, and eC represents this efficiency.

Various eC calculation methods are present, and for example, mC/nC is available.

(Method E')

The encoding efficiency eC may be figured out using the code amount rC of the transform coefficients in place of the number nC of transform coefficients other than zero, and for example, mC/rC is available.

The evaluation method of mC is one described in the method B and may be any one related to the energy of the residual signal that is obtained by subjecting the transform coefficients to the inverse quantization and the inverse transform.

Irrespective of the above description, a function (inputs are mC, nC, and rC) for figuring out eC may be any function as long as it monotonically increases for mC and monotonically decreases for nC and rC.

(Method F)

The evaluation value xC is a value fC of cbp (Coded Block Pattern) indicative of whether transform coefficients other than zero exist (the number nC of transform coefficients other than zero is not 0).
fC=0 (when nC is 0)
fC=1 (when nC is other than zero)

(Method G)

The evaluation value xC is a value dC indicative of whether the transform coefficient of the minimum order is zero. In a DCT transform and a Hadamard transform, the transform coefficient of the minimum order is a DC coefficient.
dC=0 (when the transform coefficient of the minimum order is zero)
dC=1 (when the transform coefficient of the minimum order is other than zero)

The evaluation value xC may be an expression, e.g., (nC+vC) that is obtained by using a plurality of the values nC, 1C, mC, rC, vC, eC, fC, and dC described in the method A to method G.

(Description of Mode Estimating Portion 123)

The mode estimating portion 123 estimates a scan mode depending on the evaluation value xC output from the transform coefficient evaluating portion 121, to output as a mode estimation signal.

In a case where the evaluation value xC indicative of the features of the transform coefficients is small such as when the number of the transform coefficients is small, it is shown that the residual signal is small, i.e., that the prediction signal well matches an original image.

In a case where the prediction image is obtained by the intra-screen prediction, it is considered that a block to be encoded is similar to the surrounding blocks.

When the block to be encoded moves much differently from the surrounding blocks in the case of performing the inter-screen prediction, it is considered that the prediction may go wrong, and thus, it is considered otherwise that the block to be encoded and the surrounding blocks are similar in some degree even in the case of the inter-screen prediction. It is also considered that the block to be encoded and blocks of the reference frame used in the generation of the prediction image are similar.

In this manner, it is considered that the block to be encoded and the surrounding blocks (or blocks of the reference frame) share a similar property, enabling the mode to be estimated at a high accuracy from the already encoded surrounding blocks (or blocks of the reference frame).

On the contrary, in a case where the evaluation value xC is large, there is a great difference from the already encoded surrounding blocks, rendering the mode estimation difficult.

Based on this property, the mode estimating portion 123 sets as a mode estimation signal a scan mode having a higher priority order between a scan mode of the upper block and a scan mode of the left block when the evaluation value xC indicative of the features of the transform coefficients is small, but sets the zigzag scan as the mode estimation signal when the evaluation value xC is large. In this case, the priority order is an order of the zigzag scan, the vertical priority scan, and the horizontal priority scan. In the case of this embodiment, the mode numbers are assigned in the descending priority order so that a higher priority order mode can be selected simply by selecting one with a smaller mode number.

The following experiment is performed to define a threshold value for determining whether the evaluation value xC indicative of the features of the transform coefficients is small.

First, a plurality of test images are prepared to define a plurality of predetermined threshold values. A certain one threshold is selected for each one test image to perform encoding in sequence to thereby achieve encoding of combinations of all the test images and all the threshold values.

Next, using the results of encoding, an RD cost is figured out from the code amount of the entire sequence and from a residual for the entire sequence between locally decoded images and input images.

Subsequently, for each threshold value, an average RD cost for the threshold value is figured out by averaging with the test images used.

Finally, a threshold value minimizing the average RD cost is selected so that an optimum threshold parameter can be determined.

(Description of RD Cost)

The RD cost is a cost that is calculated from a distortion amount D, a code amount R, and a predetermined constant λ and is obtained from equation (1) below.

$$RD\ cost = D + \lambda R\quad \dots\quad (1)$$

where λ represents a value for taking a balance between the distortion value D and the code amount R and is ordinarily determined by a value of the quantization parameter.

The distortion value D is obtained by performing the inverse quantization and the inverse transform in the selected encoding mode, adding to the prediction signal to generate a locally decoded image, and finding an absolute difference sum (or a square difference sum) of the locally decoded images and the input images. The code amount R is calculated from the sum of the code amount of the encoding modes and the code amount of the transform coefficients.

This RD cost is a value that becomes small when the distortion value D is small or when the code amount R is small, and enables encoding in an optimum encoding mode in the meanings of reducing the distortion value D while suppressing the code amount R by selecting an encoding mode of the minimum RD cost to perform the encoding, after the calculation of the RD cost in a plurality of encoding modes. Available as the encoding cost for use in the case of selecting the encoding mode are the distortion amount D, the encoding amount R, etc., in addition to the RD cost.

Although the above order (the priority order of the zigzag scan, the vertical priority scan, the horizontal priority scan) is used since the residual signal has more lateral edges than longitudinal edges in general, encoding of the priority order of the scan order may be imparted to header information encoding for each sequence, for each frame, and for each block set so that the priority order may be changed on a proper basis.

Other methods are applicable for the scan mode estimation. For example, methods are conceivable that use the calculation of the occurrence frequency (or the occurrence probability) for each position of the already encoded transform coefficients other than zero, and such two methods are shown below.

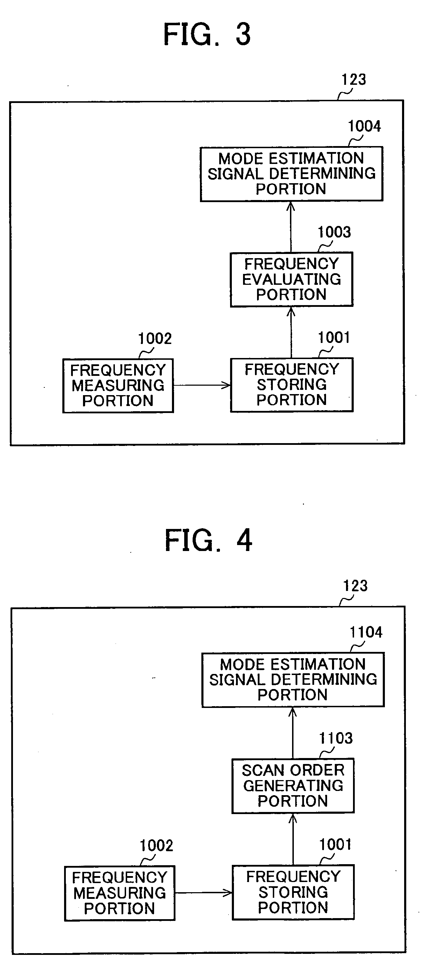

Fig. 3 is a block diagram depicting a configuration of the mode estimating portion 123 that uses the estimation method based on the occurrence frequency. In the diagram, the mode estimating portion 123 includes a frequency storing portion 1001 for storing an occurrence frequency, a frequency measuring portion 1002 that measures the occurrence frequency, a frequency evaluating portion 1003 that evaluates a bias of the occurrence frequency, and a mode estimation signal determining portion 1004 that determines a mode estimation signal.

The frequency storing portion 1001 stores an integer value equal to the number (4x4 in the example of Fig. 2) of positions of the transform coefficients. Hereinafter, a value (frequency) to be held is designated by M(x,y) when positions of the transform coefficients are designated by (x,y).

The frequency measuring portion 1002 initializes to zero all the frequencies M(x,y) stored in the frequency storing portion 1001 at the frame head or at the slice head. In the case of encoding the transform coefficients, if for all the transform coefficient positions, the transform coefficients at the positions are other than zero, then the frequency M(x,y) held in the frequency storing portion 1001 is incremented by one.

The frequency evaluating portion 1003 evaluates the value of the frequency storing portion 1001 and outputs a value indicative of how the occurrence frequency gathers. For example, calculation is made of an evaluation value H indicative of whether the occurrence position gathers in the horizontal direction and of an evaluation value V indicative of whether it gathers in the vertical direction, and if H is greater than or equal to a predetermined constant and H>V, then 3 is output, if V is greater than or equal to the predetermined constant and V>H, then 2 is output, and if not either, then 1 is provided as output.

The mode estimation signal determining portion 1004 determines a mode estimation signal in accordance with the output of the frequency evaluating portion 1003. For example, associated with the mode estimation signal are the zigzag scan for 1, the vertical scan for 2, and the horizontal scan for 3.

The above method enables the scan mode to be estimated in accordance with the occurrence frequency for each of the positions of the already encoded transform coefficients other than zero.

Fig. 4 is a block diagram of another configuration of the mode estimating portion 123 using an estimation method based on the occurrence frequency. In the diagram, the mode estimating portion 123 includes the frequency storing portion 1001, the frequency measuring portion 1002, a scan order generating portion 1103 that generates a scan order from the occurrence frequency, and a mode estimation signal determining portion 1104 that determines a mode estimation signal. The frequency storing portion 1001 and the frequency measuring portion 1002 are as already described and hence the description thereof will be omitted.

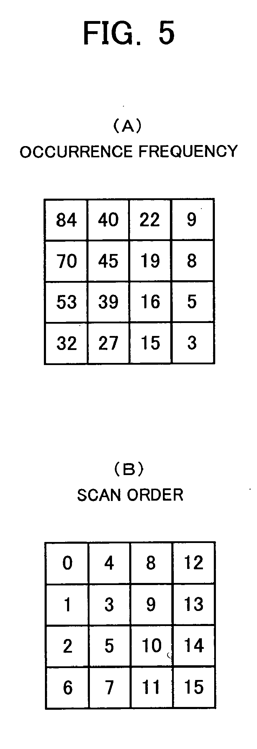

The scan order generating portion 1103 arranges the positions of the transform coefficients in the descending order of the occurrence frequency stored in the frequency storing portion 1001. The positions of the transform coefficients arranged may be used as a scan mode. For example, Fig. 5 is a diagram depicting a method of generating such a scan mode, Fig. 5 (A) representing the occurrence frequency for each transform coefficient, and Fig. 5 (B) representing the scan mode using the descending order of the occurrence frequency as the scan order.

The mode estimation signal determining portion 1104 outputs as mode estimation signals a signal indicative of a mode type and a signal indicative of a specific mode content. For example, the mode type is a number 0 (as describe hereinabove, the number is 0 when the mode is other than the zigzag scan, vertical priority scan, and the horizontal priority scan), and the information indicative of the content of the scan mode is a scan order (a signal having positional information arranged) generated by the scan order generating portion 1103.

(Description of Mode Restricting Portion 124)

In response to the evaluation value xC output from the transform coefficient evaluating portion 121, the mode restricting portion 124 restricts selectable scan modes for the output as a mode restriction signal. The mode restriction signal is a signal indicative of the number of the selectable scan modes and of a range of the selectable scan modes. It is to be noted that when the number of the selectable scan modes is one, the range of the selectable scan modes is not required and only the number of the selectable scan modes is required.

According as the selectable scan modes are restricted, the flag code amount for identifying the scan mode can be reduced, and in particular, when the number of the selectable scan modes is one, the flag encoding becomes unnecessary.

The code amount can be reduced by the scan mode switching in the cases where the bias of the transform coefficients of zero increases, that is, where the transform coefficients of zero are biased to continue longer, and where the transform coefficients of zero can be biased toward the latter half of the scan order.

For this reason, the scan mode switching effect is small in a case where the number nC of the transform coefficients other than zero is small in particular in the object block or reversely where nC is large in particular.

In a case where the code amount rC is small, when the scan mode switching is performed from a lot of options using the flag, the flag code amount becomes large as compared with the code amount rC, which may result in an increase of the code amount as a whole. Therefore, in case that the code amount rC is particularly small, it is preferred that the number of options be small, e.g., be one.

Description will be made below of the relationship with the magnitude mC of the transform coefficient, the variance vC, the encoding efficiency eC, fC of cbp, and dC.

In case that the magnitude mC of the transform coefficient after quantization is large, precedent encoding of a larger transform coefficient results in a higher encoding efficiency, and hence the effect of changing the scan order so as to achieve it is large. For this reason, the number of the options is increased as compared with the case of a small mC.

In case also that the variance vC is large, there is an effect of precedent encoding of a larger transform coefficient, and hence the number of the options is increased as compared with the case of a small vC. Also in the case of a high encoding efficiency, the number of options of the scan order is increased.

In, case that fC of cbp is zero, the number of options is set to zero.

In case that the transform coefficient dC of the minimum order is large, there is obtained an effect of precedent encoding of a larger transform coefficient even in the case of an ordinary zigzag scan, and therefore the number of options is reduced as compared with the case of a small dC.

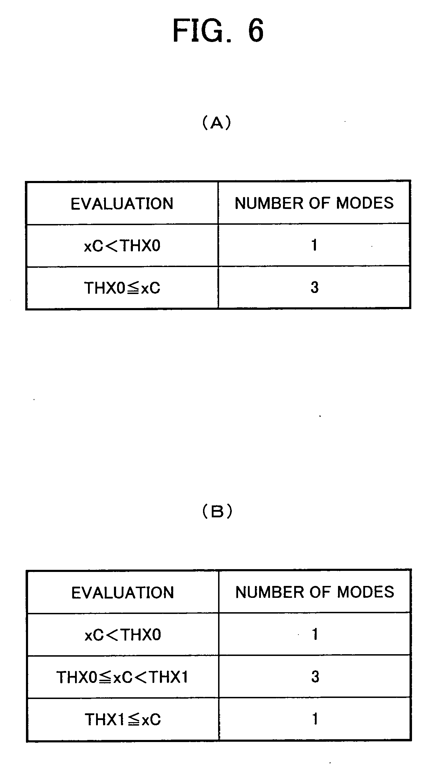

Fig. 6 is a diagram explaining behavior of the mode restricting portion 124. In a method as depicted in Fig. 6(A), the number of the selectable scan modes is restricted to one if the evaluation value xC of the transform coefficient is less than a predetermined value THXO. The number of the selectable scan modes is set to N (N>1) if it is more than or equal to the predetermined value THXO.

In another method, as depicted in Fig. 6(B), the number of the selectable scan modes is restricted to 1 if the evaluation value xC of the transform coefficient is less than the predetermined value THXO. The number of the selectable scan modes is set to N1 (N1>1) if it is more than or equal to the predetermined value THXO and less than another threshold value THX1. The number of the selectable scan modes is set to N2 if it is more than or equal to the predetermined value THX1.

When the number of the selectable scan modes is more than 1, output are a mode number list showing a range of the selectable scan modes in addition to the number of the selectable scan modes. In this case, if it is 2, output are 1 and 2 indicating the mode numbers, and if it is 3, output are 1, 2 and 3.

It is to be noted that the mode estimating portion 123 and the mode restricting portion 124 may employ respectively different evaluation values xC of the transform coefficients. Configuration may be such that the mode estimating portion 123 uses the code amount rC while the mode restricting portion 124 uses the number nC of the transform coefficients.

The predetermined values THXO and THX1 are determined by the following experiments.

First, a plurality of test images are prepared and then a plurality of different combinations (threshold parameters) of the predetermined values THXO and THX1 are determined. A certain threshold parameter is selected for one of the test images to perform sequential encoding, thereby achieving the encoding of all the test images and of all the combinations of the threshold parameters.

Next, using the results of the encoding, the RD cost is figured out from the code amount of the entire sequence and from the residual between the locally decoded images and the input images for the entire sequence. Then, for each threshold parameter, averaging with the test image used is performed to figure out an average RD cost for the threshold parameter.

At last, a threshold parameter minimizing the average RD cost is selected so that an optimum threshold parameter can be determined.

The scan modes to be restricted in the case of performing the mode restriction are determined by the following experiments.

First, a plurality of test images are prepared and an image encoding device is provided to which is added a device for counting the number of the scan modes selected. This image encoding device operates without performing the mode restriction and need not necessarily be the image encoding device described herein but may be an existing image encoding device.

Using this image encoding device not performing the mode selection, encoding is carried out for all the test images prepared.

Next, a value averaged with the test image is figured out for the selected number. The scan modes used by the mode restricting portion 124 are N scan modes in the descending order of the selected number. Used as the number of N is a value of M at which a predetermined rate (e.g., 50%) is first exceeded by a value of cumulative selectivity in the case of summing up M selectivities in descending order of the selectivity, the selectivity selected being figured out for each scan mode.

(Description of Mode Selecting Portion 122)

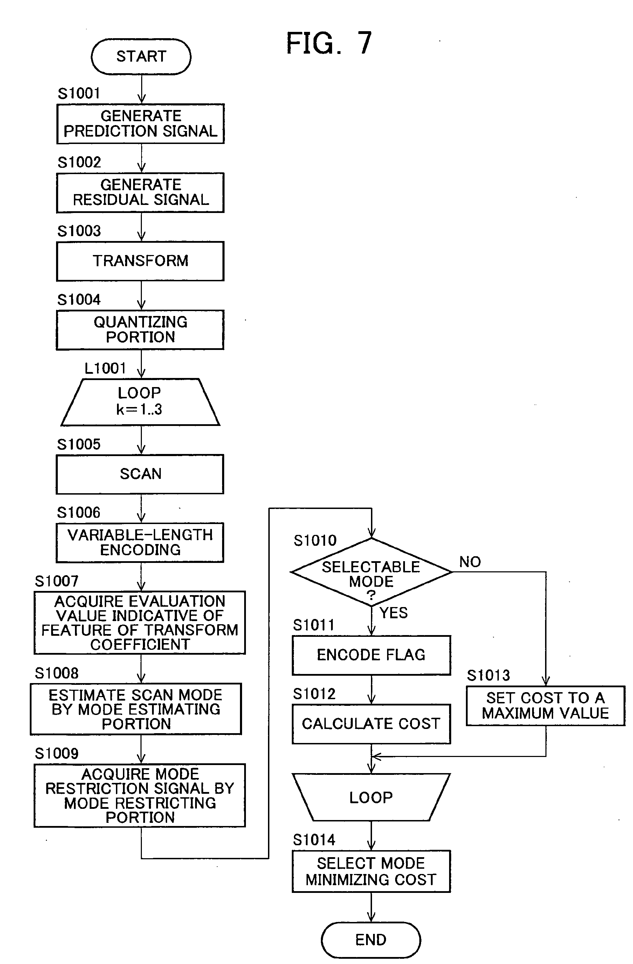

The mode selecting portion 122 selects a scan mode based on output values of the mode estimating portion 123 and of the mode restricting portion 124. Behavior of the mode selecting portion 122 will be described referring to a flowchart of Fig. 7 (parenthesized letters and numerals, e.g., (S1001) etc., at the left end in the following description correspond to process boxes of Fig. 7).

(S1001) Generate a prediction signal by the predicting portion 111.
(S1002) Generate a residual signal from a difference between the prediction signal and an input signal by the subtracting portion 101.
(S1003) Transform the residual signal by the transforming portion 112.
(S1004) Quantize a transform coefficient by the quantizing portion 113.

(L1001) Change a control variable k from 1 to 3 to repeatedly execute S1005 to S1013 below. Then go to S1014. In the case of using a scan mode based on the occurrence probability, perform the following processes for the control variables k=0, 1, 2, and 3 with this mode number being 0.

(S1005) Scan by the scanning portion 114 in a scan mode (scan mode of the mode number k) corresponding to the control variable k.
(S1006) Perform variable-length encoding of the quantized and scanned transform coefficient by the variable-length encoding portion 115.
(S1007) Acquire an evaluation value xC indicative of a feature of the transform coefficient by the transform coefficient evaluating portion 121.
(S1008) Estimate a scan mode to acquire a mode estimation signal by the mode estimating portion 123 in accordance with the evaluation value xC of the transform coefficient evaluating portion 121.
(S1009) Restrict selectable scan modes to acquire a mode restriction signal by the mode restricting portion 124 in accordance with the evaluation value xC of the transform coefficient evaluating portion 121.
(S1010) Determine whether the scan mode corresponding to the control variable k is selectable referring to the mode control signal. If selectable, go to S1011, and if not selectable, go to S1013.
(S1011) Encode a flag by the variable-length encoding portion 115.
(S1012) Calculate a cost using an RD cost calculated from a distortion amount D and a code amount R. The code amount R includes a code amount of the transform coefficient and a code amount of the flag.
(S1013) Set a cost corresponding to the control variable k to the maximum value so that this scan mode is not selected.

(S1014) Select a scan mode minimizing the cost to output it to the scanning portion 114 and the variable-length encoding portion 115.

Through the behavior, the scan modes are estimated in accordance with the features of the transform coefficients and the selectable scan modes are restricted in accordance with the evaluation value xC, so that an optimum scan mode can be selected.

(Description of Variable-length Encoding Portion 115)

The variable-length encoding portion 115 encodes quantized transform coefficients aligned one-dimensionally by the scanning portion 114 while it does not encode the scan mode as a flag if the number of the selectable scan modes is restricted to 1 . If the scan mode estimated by the mode estimating portion 123 is the same as the selected scan mode, then it encodes as 1 a value indicative of whether a mode estimation signal is used while it does not encode the selected scan mode as a flag. If the selective scan modes are not restricted to 1 by the mode restricting portion 124 or if the mode estimation signal (estimated mode) and the selected scan mode differ, then it encodes as 0 the value indicative of whether the mode estimation signal is used and encodes a flag for identifying the selected scan mode.

Since the encoding effected by the variable-length encoding portion 115 during the selection of the scan mode by the mode selecting portion 122 is temporary encoding for measuring the code amount, the encoded data is discarded without outputting to the exterior. The flag encoding method may be a method encoding a difference between the selected scan mode and the mode estimation signal.

(Encoded Data of the Present Invention)

In the present invention, it is determined from the features of the transform coefficients whether a flag exists in encoded data. Accordingly, the encoded data needs to have a configuration in which the flag code is positioned posterior to the transform coefficient code or a configuration in which the flag code is positioned posterior to the code indicative of the feature of the transform coefficients.

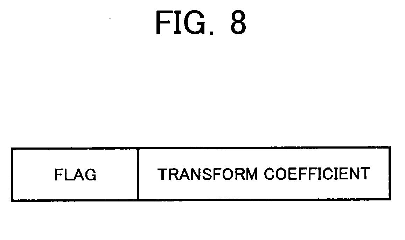

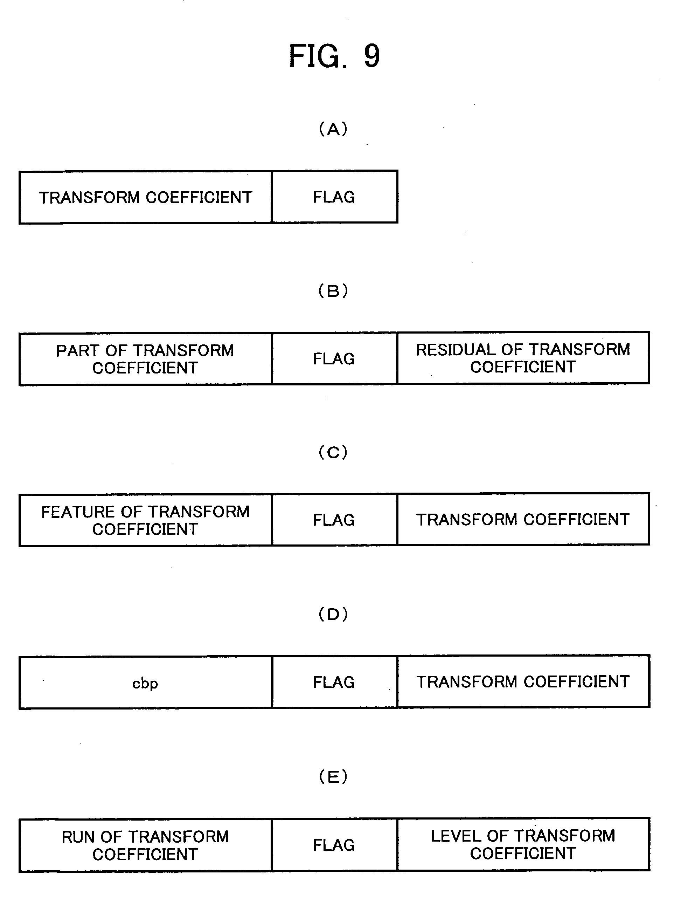

Fig. 8 is a diagram depicting a configuration of the conventional encoded data, and Fig. 9 is a diagram depicting a configuration of the encoded data of the present invention. The flag of Fig. 9 is a flag of a scan method, a flag of a transform method, or a flag of a prediction method. Although conventionally the flag is encoded prior to the transform coefficient as in Fig. 8, the flag is encoded posterior to the transform coefficient in the present invention as in Fig. 9(A). Any flag does not exist when there is no need for the flag encoding. The other configurations as in Fig. 9(B) to 9(E) may be employed.

Fig. 9(B) depicts the transform coefficient divided into two or more so that a part thereof is encoded prior to the flag and that a remaining part thereof is encoded posterior to the flag. A method of division into two parts may be e. g., a method in which a low frequency component is disposed in the former part with a high frequency component disposed in the latter part or e.g., a method in which information (run) indicative of a position of the transform coefficient of not zero is disposed in the former part with a value of the transform coefficient of not zero disposed in the latter part. Information on the number of the transform coefficients of not zero can be acquired from the positions of the transform coefficients of not zero.

In Fig. 9(C), information indicative of a feature of the transform coefficient is encoded prior to the flag and the transform coefficient is encoded posterior to the flag. The feature of the transform coefficient includes e.g., cbp, the number of the transform coefficients, and a flag indicative of a table for variable-length encoding the transform coefficient.

Fig. 9(D) depicts a case where the feature of the transform coefficient of Fig. 9(C) is cbp.

Fig. 9(E) depicts a configuration in which a run of the transform coefficient is encoded prior to the flag with a level of the transform coefficient encoded posterior to the flag.

The transform coefficient is ordinarily divided for encoding into the run indicative of a position of the transform coefficient and the level indicative of a magnitude of the transform coefficient. In the case of encoding the transform coefficients in the scan order of (1,2,0,0,-4,...), the run and level combinations (0,1) (0,2),(2,-4), ... are encoded in sequence.

Thus, the image encoding device 100 described uses the feature of the transform coefficient to restrict the options of the selectable scan modes depending on whether the scan mode switching is effective, thereby achieving a reduction in the code amount of the flag for the mode identification and the encoding at a high encoding efficiency.

By virtue of the change of the scan mode estimation method depending on the features of the transform coefficients, the scan mode estimation accuracy is improved and the flag code amount is reduced with an improved encoding efficiency.

Although in the above first embodiment there has been described the configuration having both the mode estimating portion 123 and the mode restricting portion 124, some variants may be conceivable including a configuration having only the mode estimating portion 123 but not having the mode restricting portion 124 and a configuration not having the mode estimating portion 123 but having only the mode restricting portion 124.

<<First Variant>>

(Configuration Having Only Mode Estimating Portion 123)

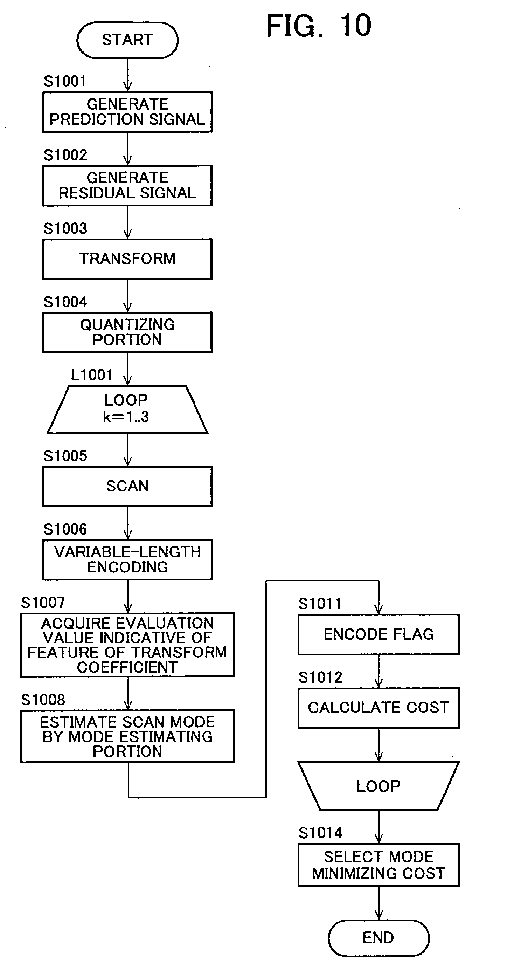

Fig. 10 is a flowchart explaining behavior of the mode selecting portion 122 of a first variant not having the mode restricting portion 124 but having the mode estimating portion 123.

The behavior of the mode selecting portion 122 in this case are basically the same as those described referring to Fig. 7 but differ in the absence of the behavior of acquiring the mode restriction signal at S1009, the behavior of determination/branching at S1010, and the behavior of setting the cost so as not to select the scan mode at S1013.

<<Second Variant>>

(Configuration Having Only Mode Restricting Portion 124)

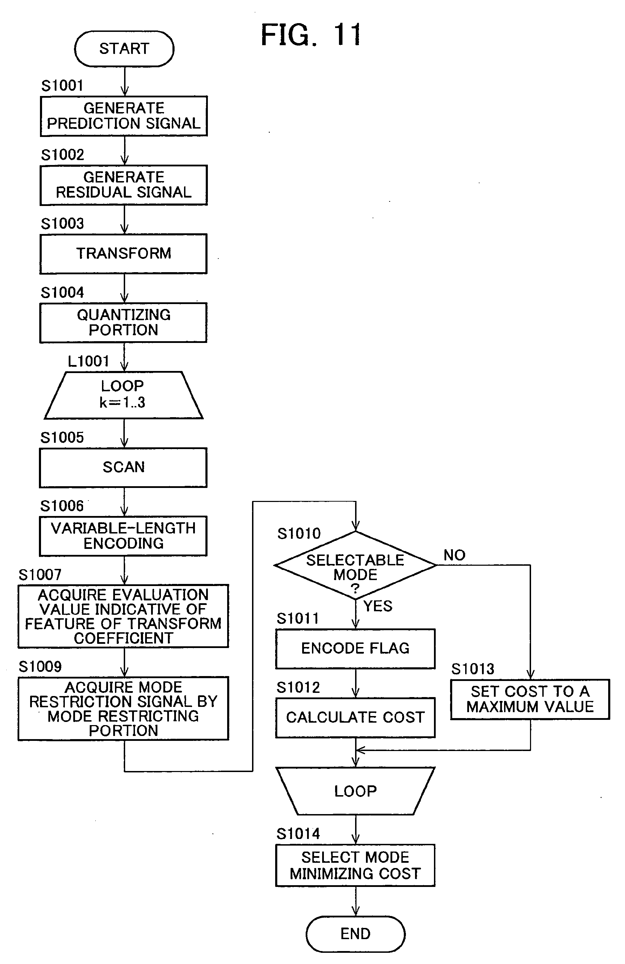

Fig. 11 is a flowchart explaining behavior of the mode selecting portion 122 of a second variant not having the mode estimating portion 123 but having the mode restricting portion 124.

The behavior of the mode selecting portion 122 in this case are basically the same as those described referring to Fig. 7 but differ in the absence of the behavior of acquiring the mode estimation signal at S1008.

Although the mode restricting portion 124 described earlier makes the behavior of outputting the mode number list showing a range of selectable scan modes in addition to the number of the selectable scan modes when the number of the selectable scan modes is more than 1, in this second variant it outputs the selectable scan mode range (the scan mode due to 1 in this case) also when the number of the selectable scan modes is 1.

<<Second Embodiment>>

An image decoding device of a second embodiment decodes the encoded data generated by the image encoding device 100 of the first embodiment.

(Configuration of Image Decoding Device 200)

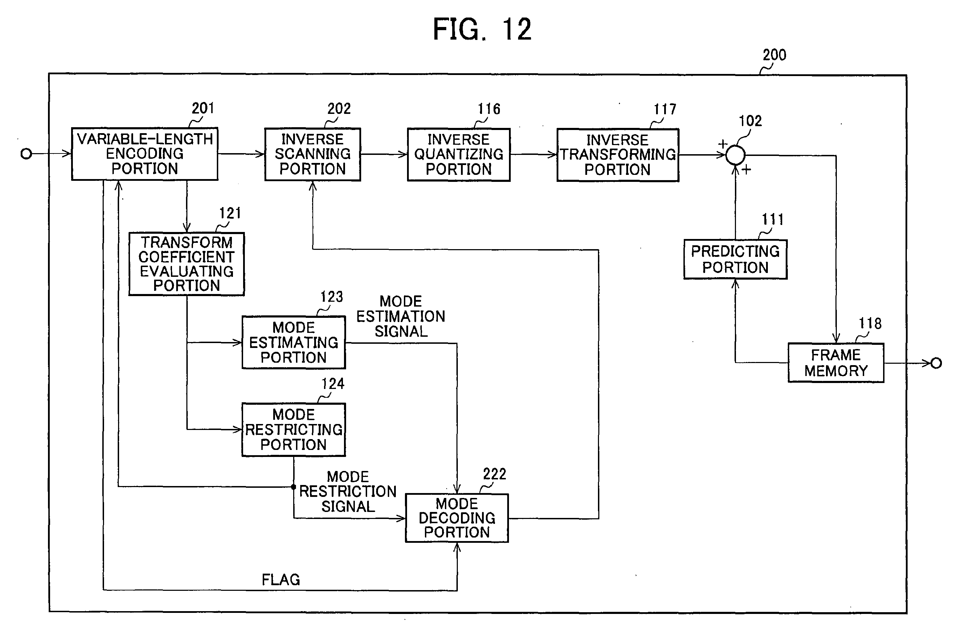

Fig. 12 is a block diagram of a configuration of an image decoding device 200 according to the second embodiment of the present invention. In the diagram, the image decoding device 200 includes a variable-length encoding decoding portion 201, an inverse scanning portion 202, the predicting portion 111, the inverse quantizing portion 116, the inverse transforming portion 117, the frame memory 118, the transform coefficient evaluating portion 121, the mode estimating portion 123, the mode restricting portion 124, a mode decoding portion 222, and the adding portion 102. Of the above configuration, similar constituent elements to those of the first embodiment are designated by the identical reference numerals and will not be described again.

(Behavior of Image Decoding Device 200)

Encoded data input to the image decoding device 200 is first provided to the variable-length encoding decoding device 201. Through variable-length decoding of the encoded data, the variable-length encoding decoding device 201 decodes a signal indicative of a prediction method and a transform coefficient in the form of a residual signal transformed and quantized. The decoded transform coefficient is output to the transform coefficient evaluating portion 121 and to the inverse scanning portion 202.

The transform coefficient evaluating portion 121 evaluates a feature of the transform coefficient and provides as its output an evaluation value xC to the mode estimating portion 123 and to the mode restricting portion 124.

The mode estimating portion 123 estimates a scan mode in accordance with the evaluation value xC, for the output as a mode estimation signal to the mode decoding portion 222.

The mode restricting portion 124 restricts selectable scan modes in accordance with the evaluation value xC, for the output as a mode restriction signal to the variable-length encoding decoding portion 201 and the mode decoding portion 222.

The variable-length encoding decoding portion 201 receives the mode restriction signal and, if the flag decoding is necessary, decodes a flag identifying one scan mode from the selectable scan modes restricted by the mode restriction signal, for the output to the mode decoding portion 222.

The mode decoding portion 222 decodes the scan mode using the mode estimation signal, the mode restriction signal, and the flag.

The inverse scanning portion 202 rearranges the conversion coefficients into an arrangement required for the inverse transform with the decoded scan mode. The inverse scanned transform coefficient is subjected to an inverse quantization by the inverse quantizing portion 116 and to an inverse transform by the inverse transforming portion 117, to regenerate a residual signal. The regenerated residual signal and the prediction signal are added together by the adding portion 102 to regenerate a locally decoded block. The regenerated locally decoded block is stored in the frame memory 118.

(Description of Mode Decoding Portion 222)

The mode decoding portion 222 decodes the scan mode using the mode restriction signal, the mode estimation signal, and the flag. In a case where the number of the scan modes is restricted to 1 by the mode restriction signal or where the value is 1 that indicates whether the mode estimation signal is used, it employs a scan mode specified by the mode estimation signal.

In a case where a plurality scan modes are allowed by the mode restriction signal or where the value is 0 that indicates whether the mode estimation signal is used, it employs a scan mode specified by the flag.

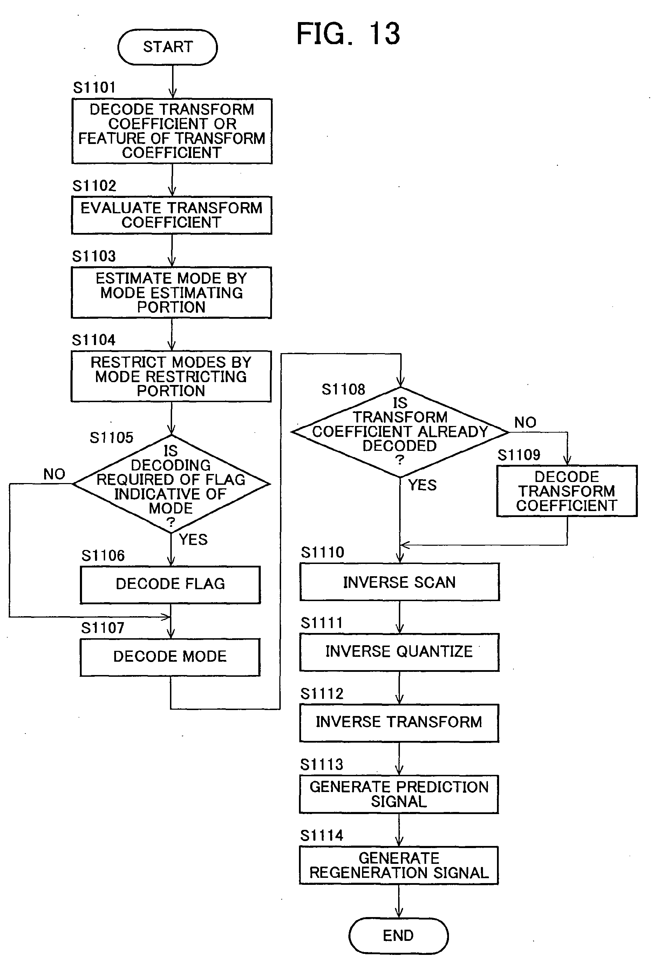

Fig. 13 is a flowchart explaining behavior of the image decoding device 200 according to the second embodiment of the present invention.

(S1101) Decode a transform coefficient by the variable-length encoding decoding device 201. In case that a feature of the transform coefficient is separated from the transform coefficient for encoding as in Fig. 9(B) to Fig. 9(E), decode the feature of the transform coefficient or a part of the transform coefficient.

(S1102) Calculate an evaluation value xC of the transform coefficient by the transform coefficient evaluating portion 121.

(S1103) Estimate a scan mode depending on the evaluation value xC of the transform coefficient by the mode estimating portion 123.

(S1104) Restrict selectable scan modes depending on the evaluation value xC of the transform coefficient by the mode restricting portion 124.

(S1105) Determine that the flag decoding is not necessary if the number of the scan modes is restricted to 1, to proceed to S1107. If the flag decoding is necessary, proceed to S1106.

(S1106) Decode a flag. If for example the value is 0 that indicates whether the mode estimation signal is used, decode an additional flag. Alternatively, decode a difference between the scan mode and the mode estimation signal.

(S1107) Decode a scan mode as a scan mode using the estimated scan mode in cases where the number of the scan modes is restricted to 1 or where the value is 1 that indicates whether the mode estimation signal is used. In the other cases, decode a scan mode used from among the selectable modes using the additional flag. Alternatively, decode a scan mode used from a difference of the mode estimation signal.

(S1108) Determine by the variable-length encoding decoding portion 201 whether the transform coefficient is already decoded. If a feature of the transform coefficient or a part of the transform coefficient is decoded at S1101, go to S1109, and if the entire transform coefficient is already decoded, go to S1110. For example, if cbp is decoded at S1101 and if cbp is 0, go to S1110.

(S1109) Decode a residual of the transform coefficient by the variable-length encoding decoding portion 201.

(S1110) Inverse scan the transform coefficient by the inverse scanning portion 202.

(S1111) Inverse quantize the transform coefficient by the inverse quantizing portion 116.

(S1112) Perform inverse transform by the inverse transforming portion 117 to decode a residual signal.

(S1113) Generate a prediction signal by the predicting portion 111.

(S1114) Sum the prediction signal and the residual signal by the adding portion 102 to generate a regeneration signal.

Thus, the image decoding device 200 described uses the feature of the transform coefficient to restrict the options of the selectable scan modes depending on whether the scan mode switching is effective, thereby achieving a reduction in the code amount of the flag for the mode identification and enabling the decoding of the encoded data encoded at a high encoding efficiency.

By virtue of the change of the scan mode estimation method depending on the feature of the transform coefficient, a high scan mode estimation accuracy is achieved and the encoded data can be decoded with the flag code amount reduced.

Although in the second embodiment, description has been made of the configuration having both the mode estimating portion 123 and the mode restricting portion 124, its variants may be feasible such as a configuration having the mode estimating portion 123 but not having the mode restricting portion 124 and a configuration not having the mode estimating portion 123 but having the mode restricting portion 124.

<<Third Variant>>

(Configuration Having Only Mode Estimating Portion 123)

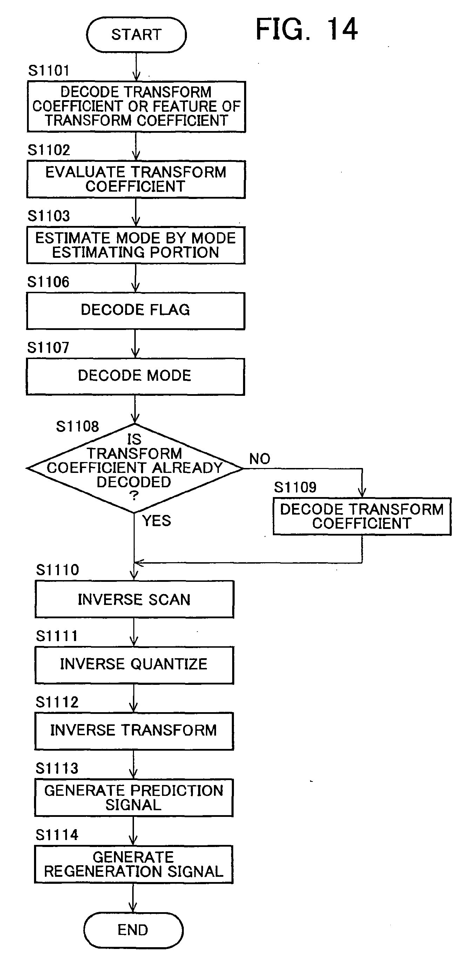

Fig. 14 is a flowchart explaining behavior of the image decoding device 200 of a third variant not having the mode restricting portion 124 but having the mode estimating portion 123.

The behavior of the mode selecting portion 122 in this case are basically the same as those described referring to Fig. 13 but differ in the absence of the behavior for acquiring the mode estimation signal at S1104 and in the absence of the determination and branching at S1105. Furthermore, if the value is 1 that indicates whether the mode estimation signal is used, then the estimated mode is used for decoding, whereas if the value is 0, then the mode specified by the flag is used for decoding.

<<Fourth Variant>>

(Configuration Having Only Mode Restricting Portion 124)

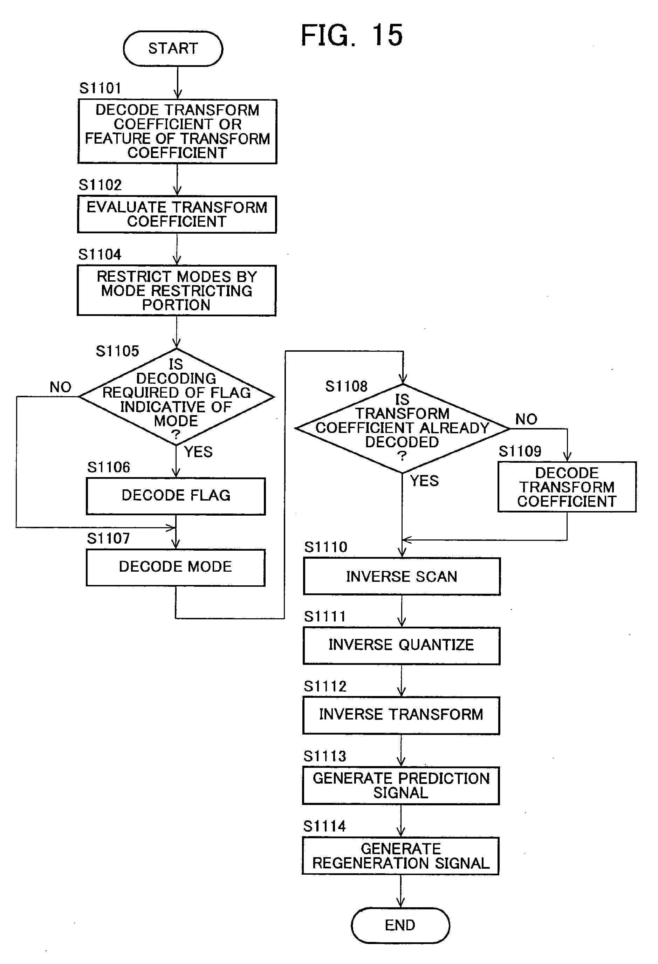

Fig. 15 is a flowchart explaining behavior of the image decoding device 200 of a fourth variant not having the mode estimating portion 123 but having the mode restricting portion 124.

The behavior of the mode selecting portion 122 in this case are basically the same as those described referring to Fig. 13 but differ in the absence of the behavior for acquiring the mode estimation signal at S1103.

The mode restricting portion 124 in this case outputs a selectable scan mode also when the number of the selectable scan modes is 1.

<<Third Embodiment>>

A third embodiment will be described in the case of selecting a transform mode for decoding. In this case, the quantizing system and the scanning system are determined in advance.

(Configuration of Image Encoding Device 300)

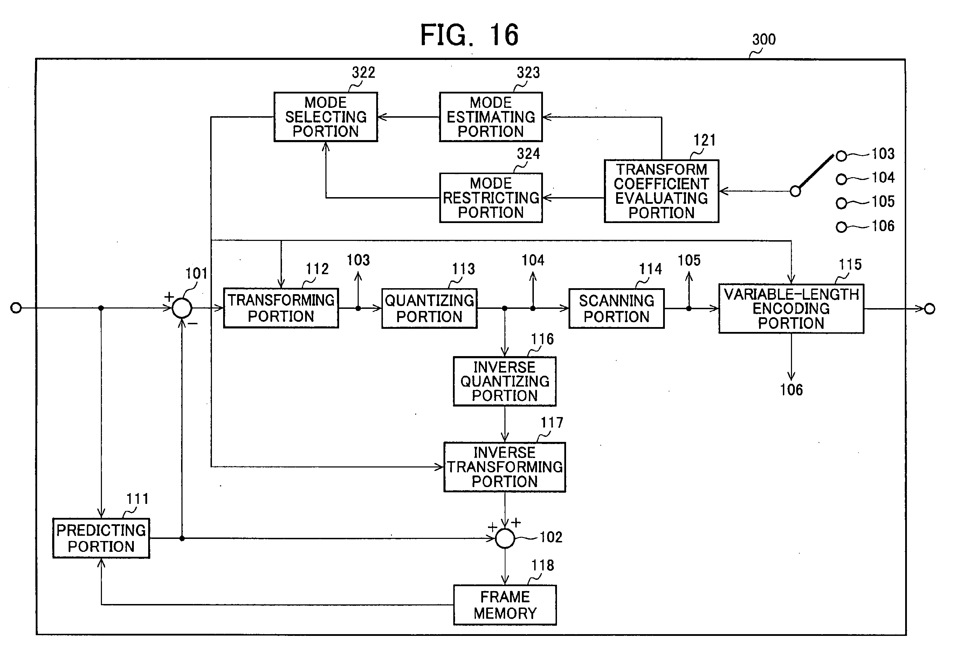

Fig. 16 is a block diagram of a configuration of an image encoding device 300 according to the third embodiment of the present invention. In the diagram, the image encoding device 300 includes the predicting portion 111, the transforming portion 112, the quantizing portion 113, the scanning portion 114, the variable-length encoding portion 115, the inverse quantizing portion 116, the inverse transforming portion 117, the frame memory 118, the transform coefficient evaluating portion 121, a mode selecting portion 322, a mode estimating portion 323, a mode restricting portion 324, the subtracting portion 101, and the adding portion 102. Of the above configuration, similar constituent elements to those of the first embodiment are designated by the identical reference numerals and will not be described again.

(Behavior of Image Encoding Device 300)

The image encoding device 300 decomposes an input image into blocks and, for each block, first activates the mode selecting portion 322 and then activates the transforming portion 112, the quantizing portion 113, the scanning portion 114, the variable-length encoding portion 115, the transform coefficient evaluating portion 121, the mode estimating portion 323, and the mode restricting portion 324 to select a transform mode to send the selected transform mode to the transforming portion 112, the inverse transforming portion 117, and the variable-length encoding portion 115.
The input image is then subjected to the conventional encoding processing using the selected transform mode.
The transform method used by the transforming portion 112 in this embodiment may be a DCT transform, a two-dimensional KLT transform, or a one-dimensional KLT transform. The KLT transform is a linear orthogonal transform similar to the DCT transform. It is to be noted that the DCT transform uses a basis based on a discrete cosine basis whereas the KLT transform uses a basis calculated in advance using an actual image so that the energy converges to a decimal transform coefficient.
The two-dimensional KLT transform executes in series a horizontal KLT transform and a vertical KLT transform. The one-dimensional KLT transform executes a single KLT transform for a numerical value line rearranged one-dimensionally on for each block. Without being limited to the DCT transform and the KLT transform, use may be made of a DST transform that is a discrete sine transform, a wavelet transform, a Gabor transform, a slant transform, etc.
In this embodiment, the mode numbers 1, 2, and 3 indicative of the transform methods (transform modes) are respectively imparted to the DCT transform, the two-dimensional KLT transform, and the one-dimensional KLT transform.

(Description of Mode Estimating Portion 323)

The mode estimating portion 323 estimates a transform mode depending on an evaluation value xC output from the transform coefficient evaluating portion 121, for the output as a mode estimation signal.
If the evaluation value xC indicative of a feature of the transform coefficient is small, then the estimation using block information from its periphery is considered to be right, and hence it sets as a mode estimation signal a mode number of one having a higher priority between an upper block and a left block. Since in general the KLT transform has a higher encoding efficiency than the DCT transform has and the two-dimensional transform has a higher encoding efficiency than the one-dimensional transform has, the selection is made in the order of the two-dimensional KLT transform, the DCT transform, and the one-dimensional KLT transform.
If the evaluation value xC is large, then the prediction is considered to be hardly right, and hence it sets a mode number (1) indicative of the DCT transform as a mode estimation signal, fixedly without performing the prediction utilizing the peripheral block information.
Another method is also employable for determining the mode estimation signal utilizing an occurrence frequency of the transform mode of the block already encoded.

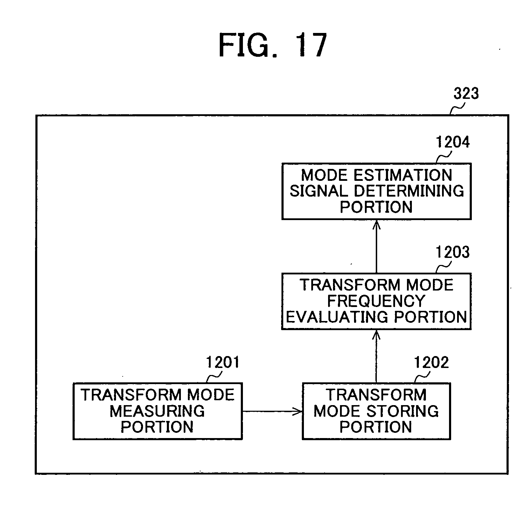

Fig. 17 is a block diagram of a configuration of the mode estimating portion 323 that uses an estimation method based on the occurrence frequency. In Fig. 17, the mode estimating portion 323 includes a transform mode storing portion 1201 that stores a transform mode used, a transform mode measuring portion 1202, a transform mode frequency evaluating portion 1203 that evaluates a frequency of the transform mode, and a mode estimation signal determining portion 1204 that determines a mode estimation signal.
The transform mode storing portion 1201 stores a type of the transform mode used for each block position. It stores a type $T(x, y)$ of the transform mode used for each block position $(x,y)$.
The transform mode measuring portion 1202 initializes to zero all the types $T(x, y)$ at the frame head or at the slice head. In the case of encoding the transform coefficient, the value of the transform mode used is stored in $T(x,y)$.
The transform mode frequency evaluating portion 1203 refers to the transform mode type $T(x, y)$ in the transform mode storing portion 1201 to evaluate the occurrence frequency of the transform mode. For example, it refers to $T(x, y)$ of blocks around a block to be encoded, to count the occurrence frequency of each transform mode to output a value of the transform mode having the maximum occurrence frequency as a. result of the count.
The mode estimation signal determining portion 1204 outputs as a mode estimation signal a signal indicative of a type of the transform mode and a signal indicative of a specific content of the transform mode. For example, the mode type is designated by the number 0 (the mode number 0 is given when the transform method is other than the DCT transform, the two-dimensional KLT transform, and the one-dimensional KLT transform described above), and the information indicative of the content of the mode is the transform mode having the maximum occurrence frequency output from the transform mode frequency evaluating portion 1203.

(Description of Mode Restricting Portion 324)

The mode restricting portion 324 restricts selectable transform modes depending on the evaluation value xC acquired by the transform coefficient evaluating portion 121, for the output as a mode restriction signal.

The transform mode switching aims at improving the encoding efficiency in cases where a lot of energy can be concentrated onto a few transform coefficients or where the number of the transform coefficients of zero can be increased. In cases where the number of the transform coefficients is particularly small or where the transform coefficients concentrate onto the DC components, it is considered that there is little or no difference even if any transform mode is used.

For example, in cases where the number nC of the transform coefficients other than zero is small or where the code amount rC of the transform coefficient or the transform coefficient dC of the minimum order is zero, the flag code amount is greater than the transform coefficient code amount, and hence, the number of the selectable transform modes is restricted to 1 if the evaluation value xC is less than or equal to a predetermined value.

Otherwise, i.e., if the evaluation value xC is greater than the predetermined value, then the number of the selectable transform modes is set to 3, to output as mode restriction signals the mode numbers 1, 2, and 3 indicative of a range of the selectable transform modes. Another method may be conceivable of setting the number of the selectable transform modes to more than 3 (e.g., 4), with 0, 1, 2, and 3 being given as the mode numbers indicative of the range of the selectable transform modes.

(Description of Mode Selecting Portion 322)

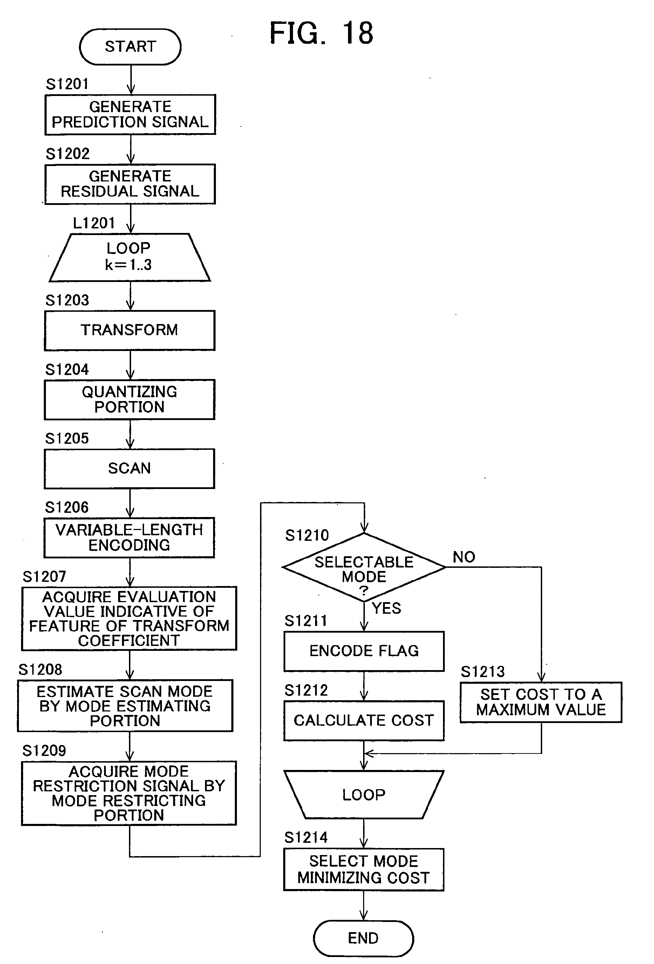

The mode selecting portion 322 selects a transform mode based on output values of the mode estimating portion 323 and of the mode restricting portion 324. Behavior of the mode selecting portion 322 will be described referring to a flowchart of Fig. 18.

(S1201) Generate a prediction signal by the predicting portion 111.
(S1202) Generate a residual signal from a difference between the prediction signal and an input signal by the subtracting portion (a difference calculating portion) 101.
(L1201) Change a control variable k from 1 to 3 to repeatedly execute S1203 to S1213 below. Then go to S1214. In the case of using a transform mode based on the occurrence probability, perform the following processes for the control variables k=0, 1, 2, and 3, with an additional process of the mode number 0 of the transform mode based on the occurrence probability.

(S1203) Transform the residual signal by the transforming portion 112 in a transform mode (a transform mode of the mode number k) specified by a mode corresponding to the control variable k.

(S1204) Quantize a transform coefficient by the quantizing portion 113.
(S1205) Scan by the scanning portion 114.
(S1206) Perform variable-length encoding of the quantized and scanned transform coefficient by the variable-length encoding portion 115.
(S1207) Acquire an evaluation value xC indicative of a feature of the transform coefficient by the transform coefficient evaluating portion 121.
(S1208) Estimate a transform mode by the mode estimating portion 323 in accordance with the evaluation value xC of the transform coefficient evaluating portion 121, and acquire a mode estimation signal.
(S1209) Restrict selectable transform modes by the mode restricting portion 324 in accordance with the evaluation value xC of the transform coefficient evaluating portion 121, and acquire a mode restriction signal.
(S1210) Determine whether the transform mode corresponding to the control variable k is selectable referring to the mode control signal. If selectable, go to S1211, and if not selectable, go to S1213.
(S1211) Encode a flag by the variable-length encoding portion 115.
(S1212) Calculate a cost using an RD cost. The code amount R includes a code amount of the transform coefficient and a code amount of the flag.
(S1213) Set a cost corresponding to the control variable k to the maximum value so that this transform mode is not selected.

(S1214) Select a transform mode minimizing the cost and output it to the transforming portion 112, the inverse transforming portion 117, and the variable-length encoding portion 115.

Thus, the image encoding device 300 described uses the feature of the transform coefficient to restrict the options of the selectable transform modes depending on whether the transform mode switching is effective, consequently achieving a reduction in the flag code amount of the flag for the mode identification and enabling encoding at a high encoding efficiency.

Due to the change of the transform mode estimation method depending on the feature of the transform coefficient, the transform mode estimation accuracy is improved and the flag code amount is reduced to improve the encoding efficiency.

Although in the third embodiment, the configuration having both the mode estimating portion 323 and the mode restricting portion 324 has been described, other configurations may be feasible similar to the first embodiment such as a configuration having the mode estimating portion 323 but not having the mode restricting portion 324 and a configuration having the mode restricting portion 124 but not having the mode estimating portion 323.

<<Fourth Embodiment>>

An image decoding device of a fourth embodiment decodes the encoded data generated by the image encoding device 300 of the third embodiment.

(Configuration of Image Decoding Device 400)

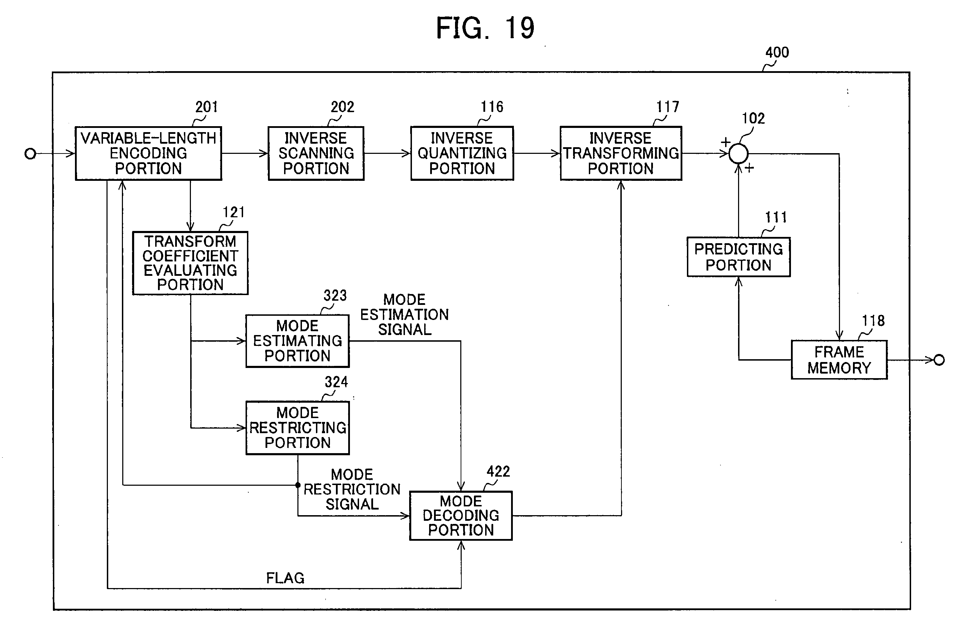

Fig. 19 is a block diagram of a configuration of an image decoding device 400 according to the fourth embodiment of the present invention. In the diagram, the image decoding device 400 includes the variable-length encoding decoding portion 201, the inverse scanning portion 202, the predicting portion 111, the inverse quantizing portion 116, the inverse transforming portion 117, the frame memory 118, the transform coefficient evaluating portion 121, a mode decoding portion 422, the mode estimating portion 323, the mode restricting portion 324, and the adding portion 102. Of the above configuration, similar constituent elements to those of the first, the second, and the third embodiment are designated by the identical reference numerals and will not be described again.

(Behavior of Image Decoding Device 400)

Encoded data input to the image decoding device 400 is first provided to the variable-length encoding decoding device 201. Through variable-length decoding of the encoded data, the variable-length encoding decoding device 201 decodes a signal indicative of a prediction method and a transform coefficient in the form of a residual signal transformed and quantized. The decoded transform coefficient is output to the transform coefficient evaluating portion 121 and to the inverse scanning portion 202.

The transform coefficient evaluating portion 121 calculates an evaluation value xC based on a feature of the transform coefficient and provides the evaluation value xC as its output to the mode estimating portion 323 and to the mode restricting portion 324.

The mode estimating portion 323 estimates a transform mode in accordance with the evaluation value xC, for the output as a mode estimation signal to the mode decoding portion 422.

The mode restricting portion 324 restricts selectable transform modes in accordance with the evaluation value xC, for the output as a mode restriction signal to the variable-length encoding decoding portion 201 and the mode decoding portion 422.

The variable-length encoding decoding portion 201 receives the mode restriction signal and, if the flag decoding is necessary, decodes a flag for identifying one transform mode from the selectable transform modes restricted by the mode restriction signal, for the output to the mode decoding portion 422.

The mode decoding portion 422 decodes the transform mode using the mode estimation signal, the mode restriction signal, and the flag.

The inverse scanning portion 202 rearranges the conversion coefficients into an arrangement required for the inverse transform. The inverse scanned transform coefficient is subjected to an inverse quantization by the inverse quantizing portion 116 and subjected to an inverse transform by the inverse transforming portion 117 using the transform mode decoded by the mode decoding portion 422, to regenerate a residual signal. The regenerated residual signal and the prediction signal are added together by the adding portion 102 to regenerate a locally decoded block. The regenerated locally decoded block is stored in the frame memory 118.

(Description of Mode Decoding Portion 422)

The mode decoding portion 422 decodes the transform mode using the mode restriction signal, the mode estimation signal, and the flag. In a case where the number of the transform modes is restricted to 1 by the mode restriction signal or where the value is 1 that indicates whether the mode estimation signal is used, it employs a transform mode specified by the mode estimation signal.

In a case where a plurality transform modes are allowed by the mode restriction signal or where the value is 0 that indicates whether the mode estimation signal is used, it employs a transform mode specified by the flag.

Although behavior of the image decoding device 400 are similar to those depicted in the flowchart of Fig. 13 described above, this embodiment replaces the scan mode of Fig. 13 with the transform mode and performs the inverse transform at S1112 using the transform mode decoded at S1107 (the mode decoding portion 422).

Thus, the image decoding device 400 described uses the feature of the transform coefficient to restrict the options of the selectable transform modes depending on whether the transform mode switching is effective, thereby achieving a reduction in the code amount of the flag for the mode identification and enabling the decoding of the encoded data encoded at a high encoding efficiency.

Due to the change of the transform mode estimation method depending on the feature of the transform coefficient, a high transform mode estimation accuracy is achieved and the encoded data can be decoded with the flag code amount reduced.

Although in the fourth embodiment, the configuration having both the mode estimating portion 323 and the mode restricting portion 324 has been described, its variants may be implementable such as, similar to the second embodiment, a configuration having the mode estimating portion 323 but not having the mode restricting portion 524 and a configuration having the mode restricting portion 324 but not having the mode estimating portion 323.

<<Fifth Embodiment>>

A fifth embodiment will be described in a case where a prediction mode is selected for encoding. In this case, the transform system, the quantization system, and the scan system are determined in advance.

(Configuration of Image Encoding Device 500)

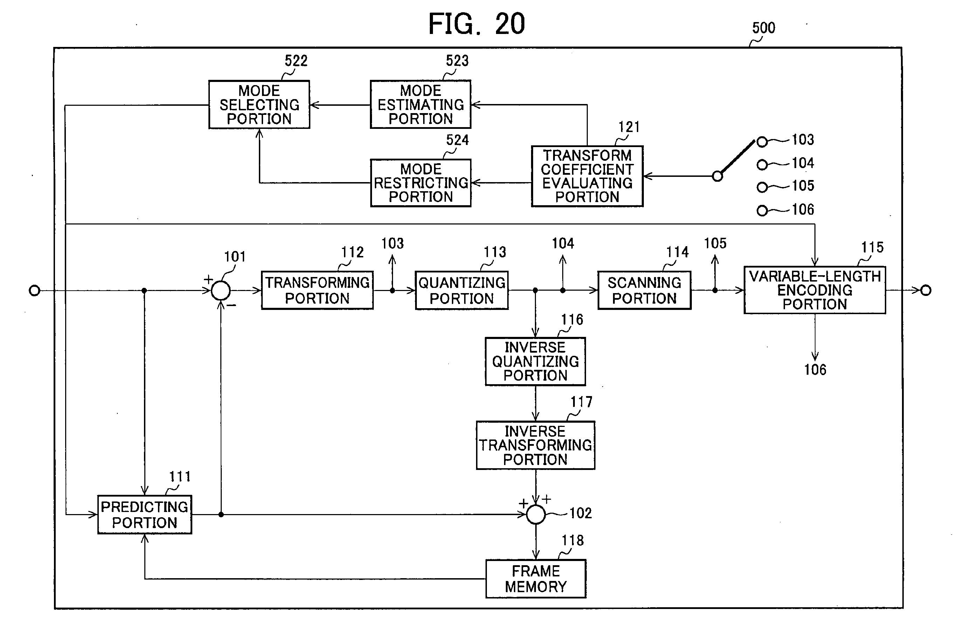

Fig. 20 is a block diagram of a configuration of an image encoding device 500 according to the fifth embodiment of the present invention. In the diagram, the image encoding device 500 includes the predicting portion 111, the transforming portion 112, the quantizing portion 113, the scanning portion 114, the variable-length encoding portion 115, the inverse quantizing portion 116, the inverse transforming portion 117, the frame memory 118, the transform coefficient evaluating portion 121, a mode selecting portion 522, a mode estimating portion 523, a mode restricting portion 524, the subtracting portion 101, and the adding portion 102. Of the above configuration, similar constituent elements to those of the first and the third embodiment are designated by the identical reference numerals and will not be described again.

(Behavior of Image Encoding Device 500)

The image encoding device 500 decomposes an input image into blocks and, for each block, first activates the mode selecting portion 522 and then activates the transforming portion 112, the quantizing portion 113, the scanning portion 114, the variable-length encoding portion 115, the transform coefficient evaluating portion 121, the mode estimating portion 523, and the mode restricting portion 524 to select a prediction mode to send the selected prediction mode to the predicting portion 111 and the variable-length encoding portion 115.
The input image is then subjected to the conventional encoding processing using the selected transform mode.

(Description of Intra-screen Prediction)

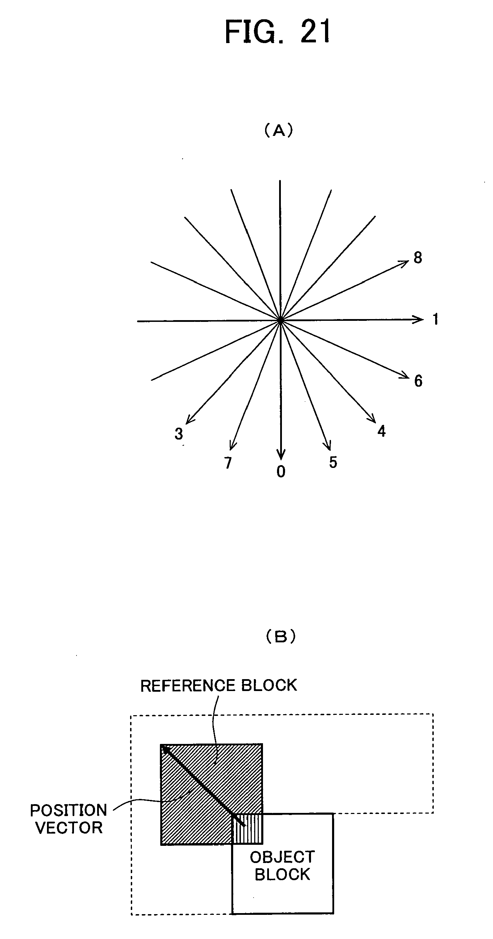

Fig. 21 is a diagram explaining an intra-screen prediction. The intra-screen prediction predicts a pixel value of an object block using regenerated images around the object block.
Fig. 21(A) is a diagram depicting the directional prediction (line prediction or one-dimensional prediction). The directional prediction is carried out by extending in a specific direction the pixel value of an already regenerated pixel of a block adjoining the object block. Fig. (A) depicts arrows indicative of directions of the intra-screen prediction and numerals. These numerals are values of the mode numbers 0 to 8 for identifying the prediction modes. Although not depicted, the intra-screen prediction includes the DC prediction besides the directional prediction. The mode number of the DC prediction is 2.
Fig. 21(B) is a diagram depicting the block prediction (plane prediction or two-dimensional prediction). The block prediction predicts a pixel value of an object block by cutting out a block from a regeneration image around the object block and is given the mode number 9. The cut-out block is called a reference block.
In a case where a non-regenerated region is present in the reference block at the time of encoding the object block, an interpolation (padding) is carried out using a pixel value of a regenerated image adjoining the non-regenerated region. In Fig. 21(B), the reference block is represented as regions indicated by diagonally hatched lines and vertically hatched lines in the diagram, but there is a region (the vertically hatched region in the diagram) where the reference block and the object block overlap, which region is the non-regenerated region.
In the block prediction, encoded as a flag for the mode identification is a position vector. (corresponding to a motion vector in the inter-screen prediction) indicative of a position of the reference block in the variable-length encoding portion 115.

(Description of Mode Estimating Portion 523)

The mode estimating portion 523 estimates a prediction mode in accordance with an evaluation value xC acquired by the transform coefficient evaluating portion 121, for the output as a mode estimation signal.
The method of estimating the prediction mode includes a function prediction and a matching prediction. The function prediction is used for the estimation of the prediction mode for the directional prediction, while the matching prediction is used for the mode estimation for both the directional prediction and the block prediction.
The prediction mode consists of a signal (mode number) indicative of the type of the prediction mode and a signal indicative of the content of the prediction mode, the two making up the mode estimation signal.
In the case of the directional prediction, the content is fixed only by the mode number, so that there is no need for the signal indicative of the content of the prediction mode. In the case of the block prediction, the position vector indicative of the position of the reference block is used as the signal indicative of the content of the prediction mode. Hereinafter, the prediction mode of a mode number m (m is an integer of from 0 to 10) is referred to as a prediction mode m.

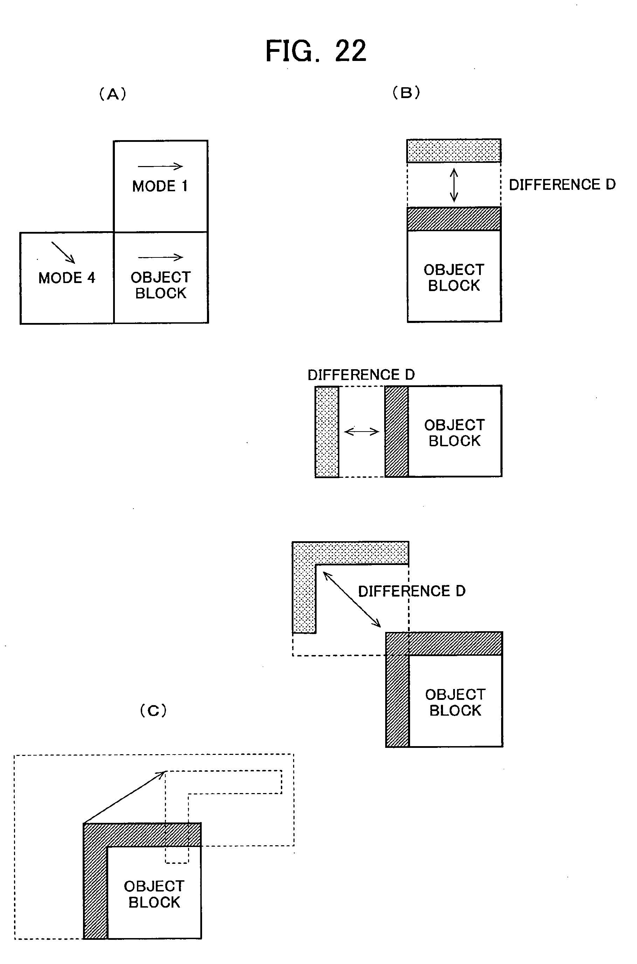

Fig. 22 is a diagram explaining the mode prediction methods (the function prediction and the matching prediction) of the intra-screen mode.
Fig. 22(A) represents one called the function prediction in which a prediction mode of an object block is estimated from prediction modes of blocks around the object block. In this method, a function determining the estimation mode is defined from the prediction mode of a block positioned on the left of the object block and from the prediction mode of a block positioned on the top the object block, the output of the function being used as the prediction mode.

This function outputs a smaller mode number when the prediction modes are arranged in the descending order of the occurrence probability and in the ascending order of the mode number. In this case, it is possible to predict a prediction mode having a high probability. In the case of arranging closely like prediction methods, a mean value of the numbers of the prediction modes may be used.

In a case where either the left block or the upper block uses a prediction mode other than the directional prediction such as the block prediction and inter-screen prediction, the prediction mode of the block using the directional prediction is given as a mode estimation signal. In a case where neither the left block nor the upper block uses the directional prediction, 0 (prediction mode 0) is given as a mode estimation signal.

Figs. 22(B) and 22(C) are diagrams explaining a method of estimating a prediction mode by using the matching prediction. Fig. 22(B) depicts a method of estimating the prediction mode of the directional prediction, while Fig. 22(C) depicts a method of estimating the prediction mode of the block prediction.

The matching prediction includes cutting out two regions from an already regenerated region and selecting one having a minimum inter-region absolute difference sum to thereby perform the estimation.

The two regions in the case of estimating the prediction mode of the directional prediction are defined for each mode of the directional prediction as depicted in Fig. 22 (B).

In this case, for each prediction mode, a value (normalized absolute difference sum D) is figured out by dividing the absolute difference sum of pixel values of two already encoded regions by the number of pixels used for the sum, and then a prediction mode minimizing the normalized absolute difference sum D is given as a mode estimation signal.

It is to be noted that the two regions for use in the calculation of the normalized absolute difference sum D are, for each direction corresponding to the prediction mode, a pixel region adjoining the object block and a pixel region lying on a line extended from the region in the opposite direction to the prediction direction.

In the case of the prediction mode 2 (DC prediction), the two regions cannot be determined due to the absence of the direction corresponding to the prediction mode. For this reason, the calculation of D corresponding to the prediction mode 2 is not performed, and if all the normalized absolute difference sum D calculated by the other prediction modes are less than a predetermined value, then the prediction mode 2 is given as a mode estimation signal.

The method of estimating a prediction mode by using pixel values of already encoded regions is not limited to the above, and existing other methods may be employed.

Fig. 22(B) depicts, from top downward, methods of finding the normalized absolute difference sum D of the prediction mode 0, the prediction mode 1, and the prediction mode 4, respectively.

For example, in the case of the prediction mode 0, the normalized absolute difference sum D is figured, in a block adjoining the object block at the top thereof, of a region (diagonally hatched region) adjoining the object block and a region (vertically hatched region) lying on a line extended in the direction (vertical direction) of the prediction mode 0.

Although nine different directions from the prediction mode 0 to the prediction mode 8 are prepared for the directional prediction, in this case, only the directions (prediction modes) easy to estimate (e.g., only the prediction mode 0 in the vertical direction and the prediction mode 1 in the horizontal direction) are limitatively employed without using all the directions.

Next, Fig. 22(C) is a diagram explaining a method of finding a prediction mode of the block prediction by the matching prediction.

This method includes comparing a pixel value of an inverted-L shape adjoining the object block with a pixel value that is obtained by cutting out the same inverted-L shape from the regeneration image, and finding a position vector of one having a minimum absolute difference sum. This method is called a template matching.

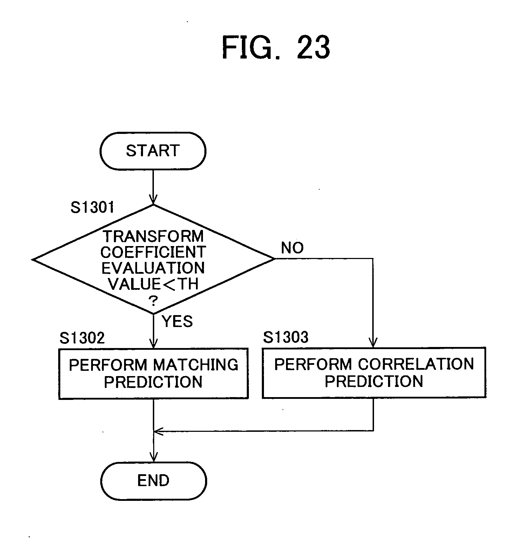

Fig. 23 is a flowchart explaining behavior of the mode estimating portion 523 that estimates a prediction mode depending on an evaluation value xC output from the transform coefficient evaluating portion 121.

(S1301) Proceed to S1302 if the evaluation value xC output as a result of evaluation of the transform coefficients is less than or equal to a predetermined value TH, and proceed to S1301 if it is greater than the predetermined value TH.

(S1302) Output mode numbers up to N-1, using the matching prediction, from pixel values of already encoded surroundings.

(S1303) Estimate a prediction mode, using the function prediction, from the prediction modes of the surrounding blocks.

(Other Behavior of Mode Estimating Portion 523)

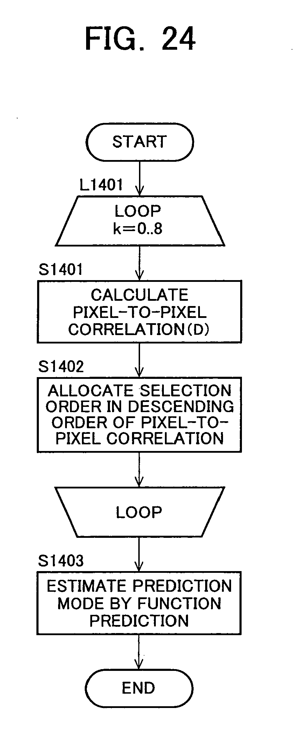

Fig. 24 is a flowchart explaining the other behavior of the mode estimating portion 523.

(L1401) Change a control variable k from 0 up to 8 to execute S1401 below repeatedly. Afterward, go to S1402.

(S1401) Calculate a normalized absolute difference sum D from two already encoded regions corresponding to the control variable k.

(S1402) Allocate a selection order in the descending order of the pixel-to-pixel correlation. Specifically, set the selection order so that the prediction mode is selected in the ascending order of the normalized absolute difference sum D.

(S1403) Estimate a prediction mode using the function prediction. Specifically, select a prediction mode (mode having a smaller mode number) having a higher selection order defined at S1402, between a prediction mode of a block adjoining the object block at its left and a prediction mode of a block adjoining it at its top.

(Further Behavior of Mode Estimating Portion 523)

The mode estimating portion 523 may generate a prediction signal using the inter-screen prediction.
In this case, when the evaluation value xC indicative of the feature of the transform coefficient is small, the block matching is used to estimate a motion vector.
Conversely, when the evaluation value xC is large, the motion vector is estimated using a median of the motion vectors of the left block, the upper block, and the upper right block surrounding a block to be encoded. The calculation of the median is carried out for each vector element (separately for X-direction vector and Y-direction vector).
The mode estimation signal at this time consists of a prediction mode 10 indicating that the mode type is the inter-screen prediction and of a motion vector indicating the mode content (and of a frame ID and a block position).
For example, in a case where the number nC of the transform coefficients other than zero is small, it is presumed that the prediction well comes true. Since in this case the pixel values of the object block and of the surroundings are considered to have similar features, it is envisaged that a proper motion vector can be predicted by matching prediction, by using the already regenerated pixel values of the object block.
Contrarily, in a case where nC is large, the pixel values of the object block and of the surroundings are considered to have different features, a satisfactory prediction cannot be expected by using the already regenerated pixel values. In this case, the function prediction is employed simply using a prediction mode of the adjoining blocks. A similar switching method is applicable to the other evaluation values acquired by the transform coefficient evaluating portion 121 without being limited to the number nC of the transform coefficients other than zero.

(Description of Mode Restricting Portion 524)

The mode restricting portion 524 restricts the selectable prediction modes in accordance with the evaluation value xC acquired by the transform coefficient evaluating portion 121 and outputs it as a mode restriction signal. The mode restriction signal indicates the number of the selectable prediction modes and the range of the selectable prediction modes. In case that the number of the selectable prediction modes is 1, only the number of the selectable prediction modes is required without any need for the range of the selectable prediction modes.
In a case where the number nC of the transform coefficients other than zero is small, it is often that the prediction well comes true, and hence, the number of the prediction modes is preferably restricted to a small value. On the contrary, a large nC means that the prediction does not come true, and therefore use of a lot of code amount for the prediction modes is considered to be inefficient.
Fig. 6 is a diagram explaining the mode restricting portion 524. As depicted in Fig. 6(A) and Fig. 6(B), depending on the transform coefficient evaluation value xC and predetermined values THXO and THX1, the number of the selectable prediction modes is restricted to 1 or N (N>1) or to 1, N1, or N2.
In a case where the number of the selectable prediction modes is greater than 1, output as a mode restriction signal are selectable prediction mode numbers in addition to the number of the selectable prediction modes. For example, when the number of the selectable prediction modes is N, output is a mode number list as the selectable prediction mode range, that is, the mode number from the mode number 0 to the mode number N-1.

(Description of Mode Selecting Portion 522)

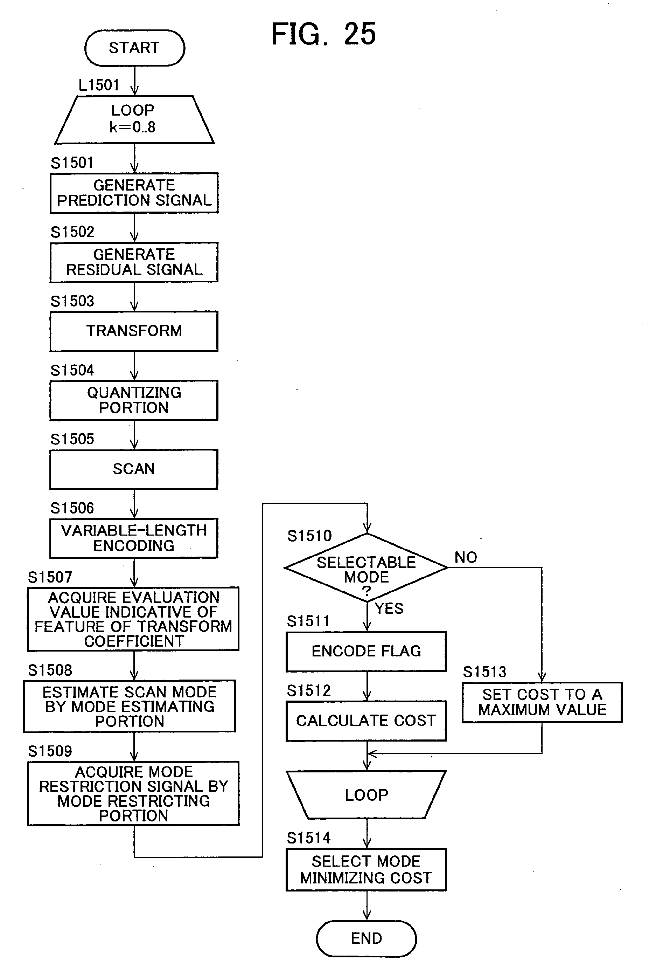

The mode selecting portion 522 selects a prediction mode based on output values of the mode estimating portion 523 and of the mode restricting portion 524. Behavior of the mode selecting portion 522 will be described with reference to a flowchart of Fig. 25.
(L1501) Change a control variable k from 0 up to 8 to execute S1501 to S1513 below repeatedly. Afterward, go to S1514.
In the case of using the matching prediction by the mode estimating portion 523, a mode number 9 indicative of the block prediction is added to the objects to be processed so that the processing is performed for the control variables K=0...9. If k is 9, then S1501 to S1513 below are repeated while further changing the position vector within a predetermined search range. If in this case the search range of the position vector is limited to a position vector (or its periphery) acquired by the matching prediction, the amount of calculation can be reduced.
In the case of using the.inter-screen prediction, this is added as a mode number 10 to repeat S1501 to S1513 below.
(S1501) Generate a prediction signal using a prediction method (a prediction mode of a mode number k) corresponding to the control variable k by the predicting portion 111. For example, if k is 0 to 8, then use is made of the directional prediction designated by the mode number k, and if k is 9, then the block prediction is used. If k is 10, then the inter-screen prediction is used.
(S1502) Generate a residual signal from a difference between the prediction signal and the input signal by the subtracting portion (residual calculating portion) 101.

(S1503) Transform the residual signal by the transforming portion 112.

(S1504) Quantize the transform coefficient by the quantizing portion 113.

(S1505) Scan it by the scanning portion 114.

(S1506) Perform variable-length encoding of the quantized and scanned transform coefficient by the variable-length encoding portion 115.

(S1507) Acquire an evaluation value xC indicative of a feature of the transform coefficient by the transform coefficient evaluating portion 121.

(S1508) Estimate a prediction mode to acquire a mode estimation signal by the mode estimating portion 523, in accordance with the evaluation value xC of the transform coefficient evaluating portion 121.

(S1509) Restrict selectable prediction modes to acquire a mode restriction signal by the mode restricting portion 524, in accordance with the evaluation value xC of the transform coefficient evaluating portion 121.

(S1510) Determine whether the prediction mode corresponding to the control variable k is selectable, referring to the mode restriction signal. If selectable, then go to S1511, and, if not selectable, then go to S1513.

(S1511) Encode a flag by the variable-length encoding portion 115.

(S1512) Calculate a cost using an RD cost. A code amount R includes the code amount of the transform coefficient and the code amount of the flag.

(S1513) Set a cost corresponding to the control variable k to the maximum value so that this prediction mode is not selected.

(S1514) Select a prediction mode minimizing the cost and output it to the predicting portion 111 and the variable-length encoding portion 115.

(Description of Variable-length Encoding Portion 115)

Description will be made of a flag encoding method effected by the variable-length encoding portion 115 of the fifth embodiment.

When the selected prediction mode is the directional prediction, encoded is a value indicative of whether the mode estimation signal is used, and, when the prediction mode corresponding to the mode estimation signal is not used, further encoded is a flag for selecting a prediction mode other than the mode estimation signal.

The value indicative of whether the mode estimation signal is used is 1 if the prediction mode corresponding to the mode estimation signal is not a selected prediction mode, but it is 0 if the mode estimation signal is used.

When the selected prediction mode is the block prediction, encoded is a difference between the selected prediction mode and the mode estimation signal. In the case of the block prediction, information indicative of the prediction mode is represented as a vector, and therefore, the difference between the prediction modes is represented by a vector (a differential vector). The differential vector is encoded in order of the horizontal direction and then the vertical direction.

Thus, the image encoding device 500 describe above uses the features of the transform coefficients to restrict the options of the selectable prediction modes depending on whether the prediction mode switching is effective, thereby reducing the code amount of the flag for mode identification and achieving encoding at a high encoding efficiency.

Furthermore, since the prediction mode estimation method is changed depending on the features of the transform coefficients, the estimation accuracy of the prediction mode is high with reduced flag code amount and with improved encoding efficiency.

(Description of Other Behavior of Mode Selecting Portion 522)

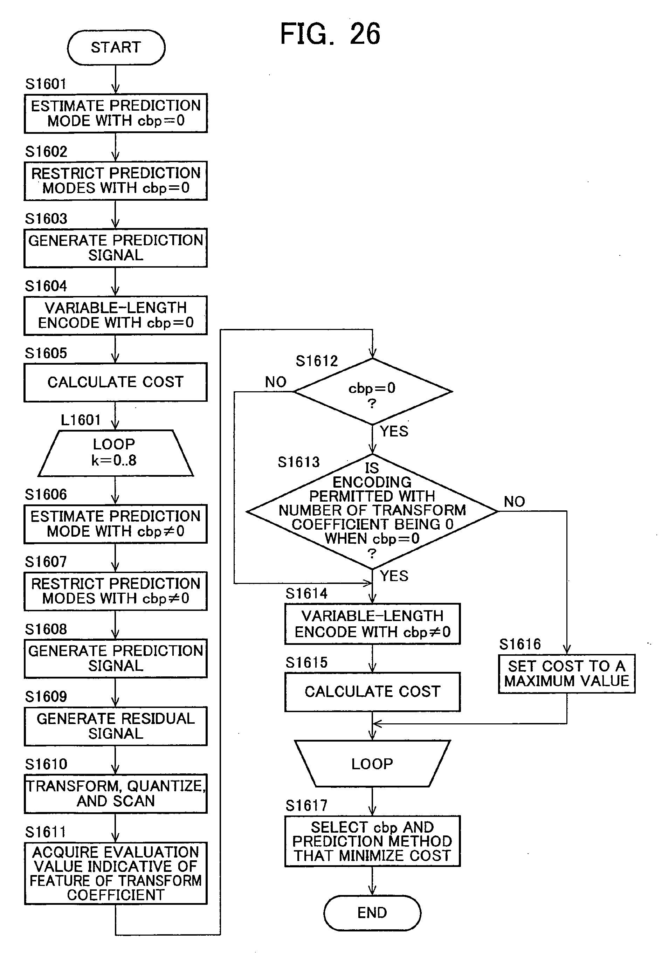

Fig. 26 is a flowchart explaining other behavior of the mode selecting portion 522. The example of behavior of Fig. 26 is a particular example of the behavior of Fig. 25.

This uses a cbp (Coded Block Pattern) for the evaluation of the transform coefficients, and, if the cbp is 0, estimates a prediction mode using the .matching prediction by the mode estimating portion 523 and restricts the selectable prediction modes to 1 by the mode restricting portion 523.

(S1601) Estimate a prediction mode when cbp=0 by the mode estimating portion 523. In this embodiment, the matching prediction is used because of cbp=0.

(S1602) Restrict the number of the prediction modes in the case of cbp=0 by the mode estimating portion 523. It is restricted to 1 because of cbp=0.

(S1603) Generate a prediction signal using a prediction mode estimated at S1601 by the predicting portion 111.

(S1604) Encode a feature of a transform coefficient, the transform coefficient, and a flag for identifying the prediction mode. Due to cbp=0 in this case, only the cbp is encoded without any need for the encoding of the feature of the transform coefficient. Due to the restriction of the prediction modes to 1, there is no need for the encoding of the mode identification flag.

(S1605) Calculate a cost using an RD cost.

(L1601) Change the control variable k from 0 up to 8, to execute S1606 to S1616 below repeatedly. Afterward, go to S1617.

(S1606) Estimate a prediction mode when cbp≠0 by the mode estimating portion 523. This embodiment uses the function prediction.

(S1607) Restrict the modes when cbp≠0 by the mode estimating portion 523. In this case, the restriction is made to from the prediction mode 0 up to the prediction mode 8.

(S1608) Generate a prediction signal by the predicting portion 111, using a prediction method (a prediction mode of the mode number k) indicated by the mode corresponding to the control variable k.

(S1609) Generate a residual signal by the subtracting portion (residual calculating portion) 101 from a difference between the prediction signal and the input signal.

(S1610) Transform, quantize, and scan the residual signal by the transforming portion 112, the quantizing portion 113, and the scanning portion 114.

(S1611) Calculate an evaluation value xC of the transform coefficient by the transform coefficient evaluating portion 121. In this case, the cbp is the evaluation value xC.

(S1612) If the cbp is 0, then go to S1613. If the cbp is other than zero, then go to S1614.

(S1613) In a case where, when cbp=0, encoding is permitted of the transform coefficients whose number of the transform coefficients other than zero is 0, then go to S1614. If not, then go to S1616.

The case where, when cbp=0, encoding is permitted of the transform coefficients whose number of the transform coefficients other than zero is 0, means a case where there can be generated such encoded data as not to encode even one transform coefficient after the encoding of cbp=1. For example, in a case where the transform coefficient value=0 is determined to be the last data of transform coefficients of the run-length encoding, such the data can be generated by encoding the first transform coefficient as the transform coefficient value=0.

(S1614) Encode a feature (cbp) of a transform coefficient, the transform coefficient, and a flag for prediction mode identification by the variable-length encoding portion 115.

(S1615) Calculate a cost using an RD cost calculated from a distortion amount D and a code amount R. The code amount R is figured out from a code amount obtained when variable-length encoding the feature (cbp) of the transform coefficient, the quantized and scanned residual signal, and the flag for prediction mode identification.

(S1616) Set a cost corresponding to the control variable k to the maximum value so that this prediction mode is not selected.

(S1617) Select a prediction method minimizing the cost and output it to the predicting portion 111 and the variable-length encoding portion 115.

The mode estimation is thus performed by the method described above, depending on whether the feature of the transform coefficient, especially, the cbp is 0.

In a case where it is considered that such a high accuracy mode as to be cbp=0 can be estimated from already encoded surrounding pixels, the mode is estimated by the matching prediction using the already encoded pixel values, thereby enabling the prediction method to be estimated at a high accuracy.

Due to the restriction of the number of the selectable prediction modes in this case to 1, the code amount of the flag indicative of the prediction mode can be 0. Thus, the encoding efficiency can be improved.

Although in the above fifth embodiment, the configuration having both the mode estimating portion 523 and the mode restricting portion 524 has been described, other configurations may be conceivable, similar to the first embodiment, including a configuration having the mode estimating portion 523 but not having the mode restricting portion 524 and a configuration having the mode restricting portion 524 but not having the mode estimating portion 523.

<<Sixth Embodiment>>

An image decoding device of a sixth embodiment decodes encoded data generated by the image encoding device 500 of the fifth embodiment.

(Configuration of Image Decoding Device 600)

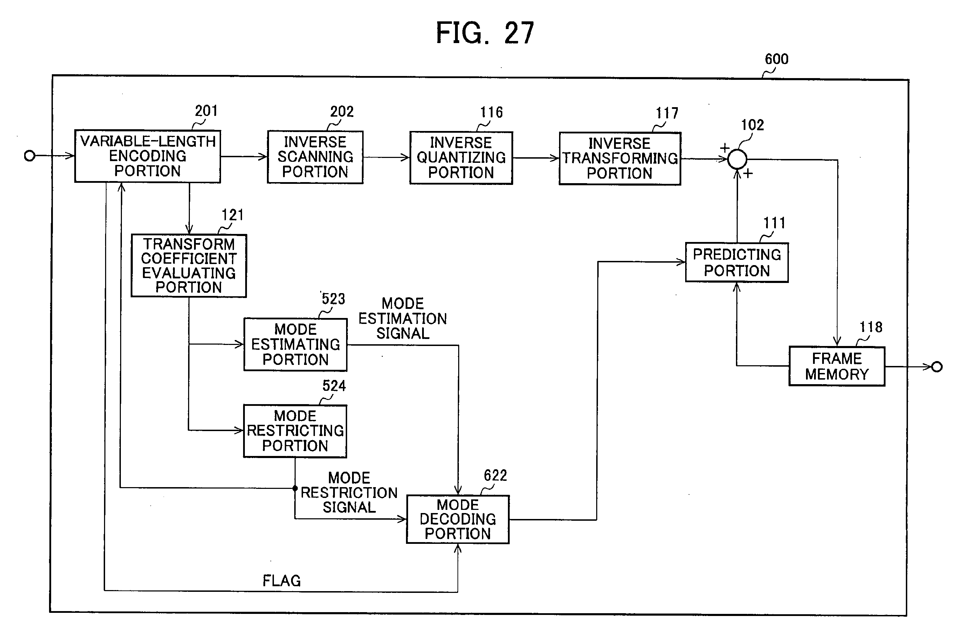

Fig. 27 is a block diagram of a configuration of an image decoding device 600 according to the sixth embodiment of the present invention. In the diagram, the image decoding device 600 includes the variable-length encoding decoding portion 201, the inverse scanning portion 202, the predicting portion 111, the inverse quantizing portion 116, the inverse transforming portion 117, the frame memory 118, the transform coefficient evaluating portion 121, a mode decoding portion 622, the mode estimating portion 523, the mode restricting portion 524, and the adding portion 102. Of the above configuration, similar constituent elements to those of the first, the second, and the fifth embodiment are designated by the identical reference numerals and will not be described again.

(Behavior of Image Decoding Device 600)

Encoded data input to the image decoding device 600 is first provided to the variable-length encoding decoding device 201. The variable-length encoding decoding device 201 performs variable-length decoding of the encoded data to decode a transform coefficient in the form of a residual signal transformed and quantized. The decoded transform coefficient is output to the transform coefficient evaluating portion 121 and to the inverse scanning portion 202.

The transform coefficient evaluating portion 121 calculates an evaluation value xC based on a feature of the transform coefficient and provides the evaluation value xC as its output to the mode estimating portion 523 and to the mode restricting portion 524.

The mode estimating portion 523 estimates a prediction mode in accordance with the evaluation value xC, to output as a mode estimation signal to the mode decoding portion 622.

The mode restricting portion 524 restricts selectable prediction modes in accordance with the evaluation value xC, to output as a mode restriction signal to the variable-length encoding decoding portion 201 and to the mode decoding portion 622.

The variable-length encoding decoding portion 201 receives the mode restriction signal and, if the flag decoding is required, decodes a flag for identifying one prediction mode from the selectable prediction modes restricted by the mode restriction signal, to output it to the mode decoding portion 622.

The mode decoding portion 622 decodes the prediction mode using the mode estimation signal, the mode restriction signal, and the flag.

The inverse scanning portion 202 rearranges the conversion coefficients into an arrangement required for the inverse transform. The inverse scanned transform coefficient is subjected to an inverse quantization by the inverse quantizing portion 116 and then subjected to an inverse transform .by the inverse transforming portion 117, to regenerate a residual signal.

The predicting portion 111 refers to decoded images stored in the frame memory 118, in accordance with the decoded prediction signal, to generate a prediction signal using the decoded prediction mode. The adding portion 102 adds the prediction signal and the regenerated residual signal together to generate a locally decoded block, for storage in the frame memory 118.

(Description of Mode Decoding Portion 622)

The mode decoding portion 622 decodes the prediction mode using the mode restriction signal, the mode estimation signal, and the flag. In a case where the number of the prediction modes is restricted to 1 by the mode restriction signal or where the value is 1 that indicates whether the mode estimation signal is used, it employs a prediction mode specified by the mode estimation signal.

In a case where a plurality prediction modes are allowed by the mode restriction signal or where the value is 0 that indicates whether the mode estimation signal is used, it employs a prediction mode specified by the flag.

Although behavior of the image decoding device 600 are similar to those depicted in the flowchart of Fig. 13 described above, this embodiment replaces the scan mode of Fig. 13 with the prediction mode and performs the inverse transform at S1112 using the prediction mode decoded at S1113 (the mode decoding portion 422).

The image decoding device 600 described above uses the feature of the transform coefficient to restrict the options of the selectable prediction modes depending on whether the prediction mode switching is effective, thereby achieving a reduction in the code amount of the flag for the mode identification and enabling the decoding of the encoded data encoded at a high encoding efficiency.

By virtue of the change of the prediction mode estimation method depending on the feature of the transform coefficient, the estimation accuracy of the prediction mode is improved and the encoded data can be decoded with the flag code amount reduced.

(Description of Other Behavior of Image Decoding Device 600).

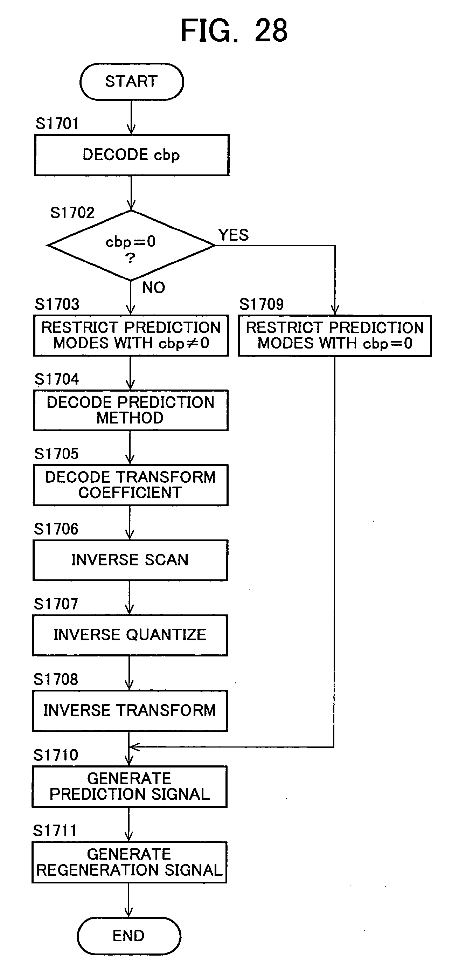

Fig. 28 is a flowchart explaining other behavior of the image decoding device 600.

> (S1701) Decode the cbp by the variable-length encoding decoding portion 201.
> (S1702) If the cbp is other than zero, then go to S1703, and, if the cbp is zero, then go to S1709.
> (S1703) Estimate a prediction mode in the case of the cbp other than 0 by the mode estimating portion 523 and restrict the prediction modes by the mode restricting portion 524.

Although the method described in the fifth embodiment may be employed for the estimation of the prediction mode in the case of the cbp other than 0, the directional prediction is used herein.

> (S1704) Decode the prediction mode by the mode decoding portion 622.
> (S1705) Decode a transform coefficient by the variable-length encoding decoding device 201.
> (S1706) Inverse scan the transform coefficient by the inverse scanning portion 202.
> (S1707) Inverse quantize the transform coefficient by the inverse quantizing portion 116.
> (S1708) Perform the inverse transform by the inverse transforming portion 117 to regenerate a residual signal, and then go to S1710.
> (S1709) Estimate a prediction mode in the case of the cbp of 0 by the mode estimating portion 523 and restrict the number of the prediction modes to 1 by the mode restricting portion 524. Due to the restriction of the number of the prediction modes to 1, select the estimated prediction mode. Set the residual signal to 0.

It is to be noted that the method described in the fifth embodiment is employed for the estimation of the prediction mode in the case of the cbp of 0.

> (S1710) Generate a prediction signal using the decoded prediction mode by the predicting portion 111.
> (S1711) Add the prediction signal and the residual signal together by the adding portion 102, to generate a regeneration signal.

Thus, according to the above behavior described, the prediction mode is estimated depending on whether the feature of the transform coefficient, especially, the cbp is 0, thereby improving the estimation accuracy of the prediction mode with the improved encoding efficiency. Furthermore, due to the restriction to 1 of the number of the selectable prediction modes in the case of the cbp of 0 without decoding of the flag, the code amount of the flag indicative of the prediction mode is reduced and the encoded data encoded at a high encoding efficiency can be decoded.

Although in the above sixth embodiment, description has been made of the configuration having both the mode estimating portion 523 and the mode restricting portion 524, other configurations may be conceivable, similar to the second embodiment, such as a configuration having the mode estimating portion 523 but not having the mode restricting portion 524 and a configuration having the mode restricting portion 524 but not having the mode estimating portion 523.

It is naturally to be understood that the present invention is not limited to the above embodiments and that the present invention may variously be modified or altered without departing from the spirit of the present invention.

EXPLANATION OF REFERENCE NUMERALS

100,300,500 ... image encoding device, 111 ... predicting portion, 112 ... transforming portion, 113 ... quantizing portion, 114 ... scanning portion, 115 ... variable-length encoding portion, 116 ... inverse quantizing portion, 117 ... inverse transforming portion, 118 ... frame memory, 101 ... subtracting portion (residual calculating portion), 102 ... adding portion, 121 ... transform coefficient evaluating portion, 122,322,522 ... mode selecting portion, 123,323,523 ... mode estimating portion, 124,324,524 ... mode restricting portion, 1001 ... frequency storing portion, 1002 ... frequency measuring portion, 1003 ... frequency evaluating portion, 1004 ... mode estimation signal determining portion, 1103 ... scan order generating portion, 1104 ... mode estimation signal determining portion, 1201 ... transform mode storing portion, 1202 ... transform mode measuring portion, 1203 ... transform mode frequency evaluating portion, 1204 ... mode estimation signal determining portion, 200,400,600 ... image decoding device, 201 ... variable-length encoding decoding portion, 202 ... inverse scanning portion, 222,422,622 ... mode decoding portion.

**Claims**

1. An image encoding device for generating encoded data, having a predicting portion that divides an input signal into blocks to generate a prediction signal of the input signal for each of the blocks, a transforming portion that transforms a residual signal between the input signal and the prediction signal to calculate a transform coefficient, a quantizing portion that quantizes the transform coefficient, a scanning portion that aligns the quantized transform coefficient one-dimensionally, and a variable-length encoding portion that encodes the scanned transform coefficient, the image encoding device comprising:

   a transform coefficient evaluating portion that calculates an evaluation value based on a feature of the transform coefficient; a mode estimating portion that, depending on the evaluation value, estimates a mode used by the predicting portion or the transforming portion or the scanning portion; a mode restricting portion that, depending on the evaluation value, restricts a range of selectable modes used by the predicting portion or the transforming portion or the scanning portion; and a mode selecting portion that selects a mode minimizing an encoding cost from among predetermined modes falling within the range of the selectable modes, wherein the mode selecting portion, in response to the input signal, operates the predicting portion, the transforming portion, the quantizing portion, the scanning portion, and the variable-length encoding portion while switching the predetermined modes used by the predicting portion or the transforming portion or the scanning portion, selects a mode minimizing the encoding cost by use of the evaluation value calculated by the transform coefficient evaluating portion, and the variable-length encoding portion encodes a flag for identifying the mode used by the predicting portion or the transforming portion or the scanning portion if the number of the restricted modes is more than one.

2. An image encoding device for generating encoded data, having a predicting portion that divides an input signal into blocks to generate a prediction signal of the input signal for each of the blocks, a transforming portion that transforms a residual signal between the input signal and the prediction signal to calculate a transform coefficient, a quantizing portion that quantizes the transform coefficient, a scanning portion that aligns the quantized transform coefficient one-dimensionally, and a variable-length encoding portion that encodes the scanned transform coefficient, the image encoding device comprising:

   a transform coefficient evaluating portion that calculates an evaluation value based on a feature of the transform coefficient; a mode restricting portion that, depending on the evaluation value, restricts a range of selectable modes used by the predicting portion or the transforming portion or th scanning portion; and a mode selecting portion that selects a mode minimizing an encoding cost from among predetermined modes falling within the range of the selectable modes, wherein

the mode selecting portion, in response to the input signal, operates the predicting portion, the transforming portion, the quantizing portion, the scanning portion, and the variable-length encoding portion while switching the predetermined modes used by the predicting portion or the transforming portion or the scanning portion, selects a mode minimizing the encoding cost by use of the evaluation value calculated by the transform coefficient evaluating portion, and the variable-length encoding portion encodes a flag for identifying the mode used by the predicting portion or the transforming portion or the scanning portion.

3. An image encoding device for generating encoded data, having a predicting portion that divides an input signal into blocks to generate a prediction signal of the input signal for each of the blocks, a transforming portion that transforms a residual signal between the input signal and the prediction signal to calculate a transform coefficient, a quantizing portion that quantizes the transform coefficient, a scanning portion that aligns the quantized transform coefficient one-dimensionally, and a variable-length encoding portion that encodes the scanned transform coefficient, the image encoding device comprising:

a transform coefficient evaluating portion that calculates an evaluation value based on a feature of the transform coefficient; a mode estimating portion that, depending on the evaluation value, estimates a mode used by the predicting portion or the transforming portion or the scanning portion; and a mode selecting portion that selects a mode minimizing an encoding cost from among predetermined modes, wherein the mode selecting portion, in response to the input signal, operates the predicting portion, the transforming portion, the quantizing portion, the scanning portion, and the variable-length encoding portion while switching the predetermined modes used by the predicting portion or the transforming portion or the scanning portion, selects a mode minimizing the encoding cost by use of the evaluation value calculated by the transform coefficient evaluating portion, and the variable-length encoding portion, if the estimated mode and the selected mode are identical, encodes information that the estimated mode is used, but if different, encoding a flag for identifying a mode used by the predicting portion or the transforming portion or the scanning portion and information that the estimated mode is not used.

4. An image decoding device for decoding encoded data from a residual signal and a prediction signal, the encoded data acquired by dividing an input signal into blocks and, for each of the blocks, one-dimensionally aligning transformed and quantized transform coefficients to perform encoding, the residual signal acquired by subjecting the encoded data to inverse scanning by an inverse scanning portion, inverse quantization by an inverse quantizing portion, and an inverse transform by an inverse transforming portion, the prediction signal acquired by prediction from an already decoded signal by a predicting portion, the image decoding device comprising:

a variable-length decoding portion that decodes the transform coefficient from the encoded data, and a flag for identifying a mode used by the predicting portion or the inverse transforming portion or the inverse scanning portion; a transform coefficient evaluating portion that calculates an evaluation value based on a feature of the transform coefficient; a mode estimating portion that, in accordance with the evaluation value, estimates a mode used by the predicting portion or the inverse transforming portion or the inverse scanning portion; a mode restricting portion that, in accordance with the evaluation value, restricts a range of selectable modes used by the predicting portion or the inverse transforming portion or the inverse scanning portion; and a mode decoding portion that sets the mode used by the predicting portion or the inverse transforming portion or the inverse scanning portion to a mode estimated by the mode estimating portion if the number of the restricted modes is 1 and to a mode identified by the flag if it is more than one, wherein the mode decoded by the mode decoding portion is used to operate the predicting portion or the inverse transforming portion or the inverse scanning portion to decode the encoded data.

5. An image decoding device for decoding encoded data from a residual signal and a prediction signal, the encoded data acquired by dividing an input signal into blocks and, for each of the blocks, one-dimensionally aligning transformed and quantized transform coefficients to perform encoding, the residual signal acquired by subjecting the encoded data to inverse scanning by an inverse scanning portion, inverse quantization by an inverse quantizing portion, and an inverse transform by an inverse transforming portion, the prediction signal acquired by prediction from an already decoded signal by a predicting portion, the image .decoding device comprising:

a variable-length decoding portion that decodes the transform coefficient from the encoded data, and a flag for identifying a mode used by the predicting portion or the inverse transforming portion or the inverse scanning portion; a transform coefficient evaluating portion that calculates an evaluation value based on a feature of the transform coefficient; a mode restricting portion that restricts a range of modes used by the predicting portion or the inverse transforming portion or the inverse scanning portion; and a mode decoding portion that sets the mode used by the predicting portion or the inverse transforming portion or the inverse scanning portion to a mode falling within the range restricted by the mode restricting portion if the number of the restricted modes is 1 and to a mode identified by the flag if it is more than one, wherein the mode decoded by the mode decoding portion is used to operate the predicting portion or the inverse transforming portion or the inverse scanning portion to decode the encoded data.

6. An image decoding device for decoding encoded data from a residual signal and a prediction signal, the encoded data acquired by dividing an input signal into blocks and, for each of the blocks, one-dimensionally aligning transformed and quantized transform coefficients to perform encoding, the residual signal acquired by subjecting the encoded data to inverse scanning by an inverse scanning portion, inverse quantization by an inverse quantizing portion, and an inverse transform by an inverse transforming portion, the prediction signal acquired by prediction from an already decoded signal by a predicting portion, the image decoding device comprising:

a variable-length decoding portion that decodes the transform coefficient from the encoded data, information of whether an estimated mode is used, and a flag for identifying a mode used by the predicting portion or the inverse transforming portion or the inverse scanning portion; a transform coefficient evaluating portion that calculates an evaluation value based on a feature of the transform coefficient; a mode estimating portion that, in accordance with the evaluation value, estimates a mode used by the predicting portion or the inverse transforming portion or the inverse scanning portion; and a mode decoding portion that sets the mode used by the predicting portion or the inverse transforming portion or the inverse scanning portion to a mode estimated by the mode estimating portion if information is decoded that the estimated mode is used and to a mode identified by the flag if information is decoded that the estimated mode is not used, wherein the mode decoded by the mode decoding portion is used to operate the predicting portion or the inverse transforming portion or the inverse scanning portion to decode the encoded data.

7. The image encoding device as defined in claim 1, 2, or 3 or the image decoding device as defined in claim 4, 5, or 6, wherein the evaluation value of the transform coefficient evaluating portion is any one of a value indicative of whether the transform coefficient other than zero is present, a number of the transform coefficients other than zero, a length of consecutive zeros of the transform coefficients, a magnitude of the quantized transform coefficient, an encoding cost when encoding the transform coefficients, a dispersion of the transform coefficients, an encoding efficiency calculated based on the magnitude of the quantized transform coefficient, and a value indicative of whether the transform coefficient of a minimum order is 0; a value calculated from a predetermined function using these values; or a combination thereof used for the mode estimation or the mode restriction.

8. The image encoding device as defined in claim 1 or 2 or the image decoding device as defined in claim 4 or 5, wherein the mode restricting portion sets the range of the selectable modes to be smaller when the evaluation value is more than a predetermined value than when it is less than or equal to the predetermined value.

9. The image encoding device as defined in claim 1 or 2 or the image decoding device as defined in claim 4 or 5, wherein the mode restricting portion has a second predetermined value larger than a first predetermined value, and wherein the mode restricting portion sets the range of the selectable modes when the evaluation value is less than or equal to the first predetermined value and when it is more than the second predetermined value to be smaller than the range of the selectable modes when the evaluation value is more than the first predetermined value and less than and equal to the second predetermined value.

10. The image encoding device as defined in claim 1 or 3 or the image decoding device as defined in claim 4 or 6, wherein the mode estimating portion estimates a mode based on a mode of an already regenerated block or on a pixel value of the already regenerated block when the evaluation value is less than or equal to a predetermined value, and uses a predetermined mode when the evaluation value is more than the prede-

termined value.

## FIG. 1

100

103
104
105
106

121 — TRANSFORM COEFFICIENT EVALUATING PORTION

123 — MODE ESTIMATING PORTION

124 — MODE RESTRICTING PORTION

122 — MODE SELECTING PORTION

115 — VARIABLE-LENGTH ENCODING PORTION → 106

114 — SCANNING PORTION — 105

113 — QUANTIZING PORTION — 104

112 — TRANSFORMING PORTION — 103

116 — INVERSE QUANTIZING PORTION

117 — INVERSE TRANSFORMING PORTION

118 — FRAME MEMORY

111 — PREDICTING PORTION

101

102

# FIG. 2

(A)

ZIGZAG SCAN

| 0 | 1 | 5 | 6 |
|---|---|---|---|
| 2 | 4 | 7 | 12 |
| 3 | 8 | 11 | 13 |
| 9 | 10 | 14 | 15 |

(B)

VERTICAL PRIORITY SCAN

| 0 | 3 | 7 | 10 |
|---|---|---|---|
| 1 | 4 | 8 | 12 |
| 2 | 5 | 11 | 14 |
| 6 | 9 | 13 | 15 |

(C)

HORIZONTAL PRIORITY SCAN

| 0 | 1 | 2 | 6 |
|---|---|---|---|
| 3 | 4 | 5 | 9 |
| 7 | 8 | 11 | 13 |
| 10 | 12 | 14 | 15 |

## FIG. 3

123

1004

MODE ESTIMATION
SIGNAL DETERMINING
PORTION

1003

FREQUENCY
EVALUATING
PORTION

1002

FREQUENCY
MEASURING
PORTION

1001

FREQUENCY
STORING
PORTION

## FIG. 4

123

1104

MODE ESTIMATION
SIGNAL DETERMINING
PORTION

1103

SCAN ORDER
GENERATING
PORTION

1002

FREQUENCY
MEASURING
PORTION

1001

FREQUENCY
STORING
PORTION

# FIG. 5

(A)

OCCURRENCE FREQUENCY

| 84 | 40 | 22 | 9 |
| 70 | 45 | 19 | 8 |
| 53 | 39 | 16 | 5 |
| 32 | 27 | 15 | 3 |

(B)

SCAN ORDER

| 0 | 4 | 8 | 12 |
| 1 | 3 | 9 | 13 |
| 2 | 5 | 10 | 14 |
| 6 | 7 | 11 | 15 |

# FIG. 6

(A)

| EVALUATION | NUMBER OF MODES |
|---|---|
| $xC < THX0$ | 1 |
| $THX0 \leqq xC$ | 3 |

(B)

| EVALUATION | NUMBER OF MODES |
|---|---|
| $xC < THX0$ | 1 |
| $THX0 \leqq xC < THX1$ | 3 |
| $THX1 \leqq xC$ | 1 |

# FIG. 7

```
                    ┌─────────────┐
                    │    START    │
                    └─────────────┘
S1001                      │
         ┌─────────────────▼─────────────┐
         │         GENERATE              │
         │     PREDICTION SIGNAL         │
         └───────────────────────────────┘
S1002                      │
         ┌─────────────────▼─────────────┐
         │         GENERATE              │
         │     RESIDUAL SIGNAL           │
         └───────────────────────────────┘
S1003                      │
         ┌─────────────────▼─────────────┐
         │         TRANSFORM             │
         └───────────────────────────────┘
S1004                      │
         ┌─────────────────▼─────────────┐
         │        QUANTIZING             │
         │         PORTION               │
         └───────────────────────────────┘
L1001                      │
              ╱─────────────────────╲
              │        LOOP          │
              │       k=1..3         │
              ╲─────────────────────╱
S1005                      │
         ┌─────────────────▼─────────────┐
         │           SCAN                │
         └───────────────────────────────┘
S1006                      │
         ┌─────────────────▼─────────────┐
         │      VARIABLE-LENGTH          │
         │        ENCODING               │
         └───────────────────────────────┘
S1007                      │
         ┌─────────────────▼─────────────┐
         │   ACQUIRE EVALUATION          │
         │   VALUE INDICATIVE OF         │
         │   FEATURE OF TRANSFORM        │
         │      COEFFICIENT              │
         └───────────────────────────────┘
S1008                      │
         ┌─────────────────▼─────────────┐
         │   ESTIMATE SCAN MODE          │
         │   BY MODE ESTIMATING          │
         │       PORTION                 │
         └───────────────────────────────┘
S1009                      │
         ┌─────────────────▼─────────────┐
         │      ACQUIRE MODE             │
         │  RESTRICTION SIGNAL BY        │
         │   MODE RESTRICTING            │
         │       PORTION                 │
         └───────────────────────────────┘
```

```
S1010
          ╱─────────────────╲        NO
          │   SELECTABLE      │───────────┐
          │     MODE          │           │
          │      ?            │           │
          ╲─────────────────╱            │
S1011              │ YES                   │
         ┌─────────▼─────────┐            │
         │   ENCODE FLAG     │            │
         └───────────────────┘   S1013    │
S1012              │           ┌──────────▼────────┐
         ┌─────────▼─────────┐ │  SET COST TO A    │
         │  CALCULATE COST   │ │  MAXIMUM VALUE    │
         └───────────────────┘ └───────────────────┘
                   │                      │
                   ◄──────────────────────┘
              ╱─────────────────╲
              │      LOOP         │
              ╲─────────────────╱
S1014              │
         ┌─────────▼─────────┐
         │   SELECT MODE     │
         │  MINIMIZING COST  │
         └───────────────────┘
                   │
            ┌──────▼──────┐
            │     END     │
            └─────────────┘
```

# FIG. 8

| FLAG | TRANSFORM COEFFICIENT |
|------|----------------------|

# FIG. 9

(A)

| TRANSFORM COEFFICIENT | FLAG |
|---|---|

(B)

| PART OF TRANSFORM COEFFICIENT | FLAG | RESIDUAL OF TRANSFORM COEFFICIENT |
|---|---|---|

(C)

| FEATURE OF TRANSFORM COEFFICIENT | FLAG | TRANSFORM COEFFICIENT |
|---|---|---|

(D)

| cbp | FLAG | TRANSFORM COEFFICIENT |
|---|---|---|

(E)

| RUN OF TRANSFORM COEFFICIENT | FLAG | LEVEL OF TRANSFORM COEFFICIENT |
|---|---|---|

# FIG. 10

START

S1001
GENERATE PREDICTION SIGNAL

S1002
GENERATE RESIDUAL SIGNAL

S1003
TRANSFORM

S1004
QUANTIZING PORTION

L1001
LOOP k=1..3

S1005
SCAN

S1006
VARIABLE-LENGTH ENCODING

S1007
ACQUIRE EVALUATION VALUE INDICATIVE OF FEATURE OF TRANSFORM COEFFICIENT

S1008
ESTIMATE SCAN MODE BY MODE ESTIMATING PORTION

S1011
ENCODE FLAG

S1012
CALCULATE COST

LOOP

S1014
SELECT MODE MINIMIZING COST

END

# FIG. 11

START

S1001
GENERATE
PREDICTION SIGNAL

S1002
GENERATE
RESIDUAL SIGNAL

S1003
TRANSFORM

S1004
QUANTIZING
PORTION

L1001
LOOP
k=1..3

S1005
SCAN

S1006
VARIABLE-LENGTH
ENCODING

S1007
ACQUIRE EVALUATION
VALUE INDICATIVE OF
FEATURE OF TRANSFORM
COEFFICIENT

S1009
ACQUIRE MODE
RESTRICTION SIGNAL BY
MODE RESTRICTING
PORTION

S1010
SELECTABLE
MODE
?
NO
YES

S1011
ENCODE FLAG

S1012
CALCULATE COST

S1013
SET COST TO A
MAXIMUM VALUE

LOOP

S1014
SELECT MODE
MINIMIZING COST

END

FIG. 12

200

201 VARIABLE-LENGTH ENCODING PORTION

202 INVERSE SCANNING PORTION

116 INVERSE QUANTIZING PORTION

117 INVERSE TRANSFORMING PORTION

102

111 PREDICTING PORTION

118 FRAME MEMORY

121 TRANSFORM COEFFICIENT EVALUATING PORTION

123 MODE ESTIMATING PORTION

124 MODE RESTRICTING PORTION

222 MODE DECODING PORTION

MODE ESTIMATION SIGNAL

MODE RESTRICTION SIGNAL

FLAG

# FIG. 13

```
         ( START )
           │
S1101      ▼
┌─────────────────────┐
│  DECODE TRANSFORM    │
│  COEFFICIENT OR      │
│  FEATURE OF TRANSFORM│
│  COEFFICIENT         │
└─────────────────────┘
           │
S1102      ▼
┌─────────────────────┐
│  EVALUATE TRANSFORM  │
│  COEFFICIENT         │
└─────────────────────┘
           │
S1103      ▼
┌─────────────────────┐
│  ESTIMATE MODE BY    │
│  MODE ESTIMATING     │
│  PORTION             │
└─────────────────────┘
           │
S1104      ▼
┌─────────────────────┐                          S1108
│  RESTRICT MODES BY   │                            ◇ IS
│  MODE RESTRICTING    │                        TRANSFORM
│  PORTION             │                   COEFFICIENT ALREADY ──NO──┐
└─────────────────────┘                        DECODED            S1109
           │                                       ?                 ▼
S1105      ▼                                       │YES      ┌─────────────┐
        ◇ IS                                       │         │  DECODE      │
      DECODING                                     │         │  TRANSFORM   │
  NO──REQUIRED OF FLAG                              │         │  COEFFICIENT │
      INDICATIVE OF                                 │         └─────────────┘
         MODE                                       │                │
          ?                              S1110       ▼                │
          │YES                          ┌─────────────────────┐◄──────┘
S1106     ▼                             │  INVERSE SCAN        │
┌─────────────────────┐                 └─────────────────────┘
│  DECODE FLAG         │                 S1111      │
└─────────────────────┘                             ▼
           │            S1107           ┌─────────────────────┐
           ▼                            │  INVERSE QUANTIZE    │
┌─────────────────────┐                 └─────────────────────┘
│  DECODE MODE         │                 S1112      │
└─────────────────────┘                             ▼
                                        ┌─────────────────────┐
                                        │  INVERSE TRANSFORM   │
                                        └─────────────────────┘
                                        S1113      │
                                                    ▼
                                        ┌─────────────────────┐
                                        │  GENERATE PREDICTION │
                                        │  SIGNAL              │
                                        └─────────────────────┘
                                        S1114      │
                                                    ▼
                                        ┌─────────────────────┐
                                        │  GENERATE            │
                                        │  REGENERATION SIGNAL │
                                        └─────────────────────┘
                                                    │
                                                    ▼
                                                ( END )
```

FIG. 14

START

S1101
DECODE TRANSFORM
COEFFICIENT OR FEATURE OF
TRANSFORM COEFFICIENT

S1102
EVALUATE TRANSFORM
COEFFICIENT

S1103
ESTIMATE MODE BY MODE
ESTIMATING PORTION

S1106
DECODE FLAG

S1107
DECODE MODE

S1108
IS
TRANSFORM
COEFFICIENT ALREADY
DECODED
?

NO

S1109
DECODE TRANSFORM
COEFFICIENT

YES

S1110
INVERSE SCAN

S1111
INVERSE QUANTIZE

S1112
INVERSE TRANSFORM

S1113
GENERATE PREDICTION
SIGNAL

S1114
GENERATE
REGENERATION SIGNAL

END

# FIG. 15

START

S1101
DECODE TRANSFORM COEFFICIENT OR FEATURE OF TRANSFORM COEFFICIENT

S1102
EVALUATE TRANSFORM COEFFICIENT

S1104
RESTRICT MODES BY MODE RESTRICTING PORTION

S1105
IS DECODING REQUIRED OF FLAG INDICATIVE OF MODE ?
NO
YES

S1106
DECODE FLAG

S1107
DECODE MODE

S1108
IS TRANSFORM COEFFICIENT ALREADY DECODED ?
NO
YES

S1109
DECODE TRANSFORM COEFFICIENT

S1110
INVERSE SCAN

S1111
INVERSE QUANTIZE

S1112
INVERSE TRANSFORM

S1113
GENERATE PREDICTION SIGNAL

S1114
GENERATE REGENERATION SIGNAL

END

# FIG. 16

# FIG. 17

323

1204

MODE ESTIMATION
SIGNAL DETERMINING
PORTION

1203

TRANSFORM MODE
FREQUENCY
EVALUATING PORTION

1201

TRANSFORM MODE
MEASURING
PORTION

1202

TRANSFORM
MODE STORING
PORTION

# FIG. 18

START

S1201
GENERATE
PREDICTION SIGNAL

S1202
GENERATE
RESIDUAL SIGNAL

L1201
LOOP
k=1..3

S1203
TRANSFORM

S1204
QUANTIZING
PORTION

S1205
SCAN

S1206
VARIABLE-LENGTH
ENCODING

S1207
ACQUIRE EVALUATION
VALUE INDICATIVE OF
FEATURE OF TRANSFORM
COEFFICIENT

S1208
ESTIMATE SCAN MODE
BY MODE ESTIMATING
PORTION

S1209
ACQUIRE MODE
RESTRICTION SIGNAL BY
MODE RESTRICTING
PORTION

S1210
SELECTABLE
MODE
?
— NO

YES

S1211
ENCODE FLAG

S1212
CALCULATE COST

S1213
SET COST TO A
MAXIMUM VALUE

LOOP

S1214
SELECT MODE
MINIMIZING COST

END

44

# FIG. 19

FIG. 20

500

- 522 MODE SELECTING PORTION
- 523 MODE ESTIMATING PORTION
- 524 MODE RESTRICTING PORTION
- 121 TRANSFORM COEFFICIENT EVALUATING PORTION
- 103
- 104
- 105
- 106
- 101
- 112 TRANSFORMING PORTION
- 113 QUANTIZING PORTION
- 114 SCANNING PORTION
- 115 VARIABLE-LENGTH ENCODING PORTION
- 116 INVERSE QUANTIZING PORTION
- 117 INVERSE TRANSFORMING PORTION
- 102
- 118 FRAME MEMORY
- 111 PREDICTING PORTION
- 106
- 105
- 104
- 103

# FIG. 21

(A)

(B)

REFERENCE BLOCK

POSITION VECTOR

OBJECT BLOCK

# FIG. 22

(A)

(B)

(C)

# FIG. 23

```
           ┌─────────────┐
          (    START      )
           └──────┬──────┘
                  │
  S1301           ▼
         ╱─────────────────╲
        ╱    TRANSFORM       ╲        NO
       ╱     COEFFICIENT      ╲──────────────┐
       ╲     EVALUATION       ╱              │
        ╲    VALUE<TH        ╱               │
         ╲       ?          ╱                │
          ╲───────────────╱                 │
                  │ YES                      │
  S1302           ▼           S1303          ▼
  ┌─────────────────────┐   ┌──────────────────────────┐
  │  PERFORM MATCHING   │   │  PERFORM CORRELATION      │
  │     PREDICTION      │   │      PREDICTION           │
  └──────────┬──────────┘   └─────────────┬────────────┘
             │                            │
             ▼◄───────────────────────────┘
       ┌─────────────┐
      (     END       )
       └─────────────┘
```

49

# FIG. 24

START

L1401

LOOP
k=0..8

S1401

CALCULATE
PIXEL-TO-PIXEL
CORRELATION(D)

S1402

ALLOCATE SELECTION
ORDER IN DESCENDING
ORDER OF PIXEL-TO-
PIXEL CORRELATION

LOOP

S1403

ESTIMATE PREDICTION
MODE BY FUNCTION
PREDICTION

END

## FIG. 25

```
        ( START )
           │
  L1501    ↓
      ╱─────────────╲
     ╱     LOOP       ╲
    ╱      k=0..8      ╲
   ╱───────────────────╲
           │
  S1501    ↓
  ┌─────────────────┐
  │    GENERATE      │
  │ PREDICTION SIGNAL│
  └─────────────────┘
           │
  S1502    ↓
  ┌─────────────────┐
  │    GENERATE      │
  │ RESIDUAL SIGNAL  │
  └─────────────────┘
           │
  S1503    ↓
  ┌─────────────────┐
  │    TRANSFORM     │
  └─────────────────┘
           │
  S1504    ↓
  ┌─────────────────┐
  │   QUANTIZING     │
  │    PORTION       │
  └─────────────────┘
           │
  S1505    ↓
  ┌─────────────────┐
  │      SCAN        │
  └─────────────────┘
           │
  S1506    ↓
  ┌─────────────────┐          S1510
  │ VARIABLE-LENGTH  │              ◇
  │    ENCODING      │         SELECTABLE    NO
  └─────────────────┘           MODE ?  ─────────┐
           │                        │            │
  S1507    ↓                S1511   ↓ YES        │
  ┌─────────────────┐       ┌─────────────────┐  │
  │ ACQUIRE EVALUATION│     │  ENCODE FLAG     │  │
  │ VALUE INDICATIVE OF│    └─────────────────┘  │
  │FEATURE OF TRANSFORM│            │     S1513   ↓
  │   COEFFICIENT     │    S1512    ↓     ┌──────────────────┐
  └─────────────────┘      ┌─────────────────┐│ SET COST TO A    │
           │               │ CALCULATE COST  ││ MAXIMUM VALUE    │
  S1508    ↓               └─────────────────┘└──────────────────┘
  ┌─────────────────┐             │            │
  │ ESTIMATE SCAN MODE│           ↓←───────────┘
  │ BY MODE ESTIMATING│      ╲─────────────────╱
  │    PORTION        │       ╲     LOOP        ╱
  └─────────────────┘          ╲───────────────╱
           │                        │
  S1509    ↓               S1514    ↓
  ┌─────────────────┐       ┌─────────────────┐
  │  ACQUIRE MODE    │       │  SELECT MODE     │
  │RESTRICTION SIGNAL BY│    │ MINIMIZING COST  │
  │ MODE RESTRICTING │       └─────────────────┘
  │    PORTION        │            │
  └─────────────────┘             ↓
           │                  ( END )
```

## FIG. 26

```
        ( START )
S1601       ↓
┌──────────────────────┐
│ ESTIMATE PREDICTION  │
│   MODE WITH cbp=0    │
└──────────────────────┘
S1602       ↓
┌──────────────────────┐
│ RESTRICT PREDICTION  │
│  MODES WITH cbp=0    │
└──────────────────────┘
S1603       ↓
┌──────────────────────┐
│ GENERATE PREDICTION  │
│       SIGNAL         │
└──────────────────────┘
S1604       ↓
┌──────────────────────┐
│  VARIABLE-LENGTH     │
│ ENCODE WITH cbp=0    │
└──────────────────────┘
S1605       ↓
┌──────────────────────┐
│   CALCULATE COST     │
└──────────────────────┘
L1601       ↓
    ╱──────────────╲
   ╱     LOOP       ╲
  ╱     k=0..8       ╲
S1606       ↓
┌──────────────────────┐
│ ESTIMATE PREDICTION  │
│   MODE WITH cbp≠0    │
└──────────────────────┘
S1607       ↓
┌──────────────────────┐
│ RESTRICT PREDICTION  │
│  MODES WITH cbp≠0    │
└──────────────────────┘
S1608       ↓
┌──────────────────────┐
│ GENERATE PREDICTION  │
│       SIGNAL         │
└──────────────────────┘
S1609       ↓
┌──────────────────────┐
│  GENERATE RESIDUAL   │
│       SIGNAL         │
└──────────────────────┘
S1610       ↓
┌──────────────────────┐
│ TRANSFORM, QUANTIZE, │
│      AND SCAN        │
└──────────────────────┘
S1611       ↓
┌──────────────────────┐
│ ACQUIRE EVALUATION   │
│ VALUE INDICATIVE OF  │
│ FEATURE OF TRANSFORM │
│     COEFFICIENT      │
└──────────────────────┘
```

S1612       cbp=0 ?   NO / YES

S1613   IS ENCODING PERMITTED WITH NUMBER OF TRANSFORM COEFFICIENT BEING 0 WHEN cbp=0 ?   NO / YES

S1614
```
┌──────────────────────┐
│  VARIABLE-LENGTH     │
│ ENCODE WITH cbp≠0    │
└──────────────────────┘
```

S1615
```
┌──────────────────────┐
│   CALCULATE COST     │
└──────────────────────┘
```

S1616
```
┌──────────────────────┐
│  SET COST TO A       │
│  MAXIMUM VALUE       │
└──────────────────────┘
```

```
    ╲──────────────╱
     ╲    LOOP     ╱
      ╲──────────╱
```

S1617
```
┌──────────────────────┐
│   SELECT cbp AND     │
│ PREDICTION METHOD    │
│ THAT MINIMIZE COST   │
└──────────────────────┘
            ↓
        ( END )
```

# FIG. 27

EP 2 472 872 A1

# FIG. 28

START

S1701

DECODE cbp

S1702

cbp=0
?

YES

NO

S1703

RESTRICT PREDICTION
MODES WITH cbp≠0

S1709

RESTRICT PREDICTION
MODES WITH cbp=0

S1704

DECODE PREDICTION
METHOD

S1705

DECODE TRANSFORM
COEFFICIENT

S1706

INVERSE SCAN

S1707

INVERSE QUANTIZE

S1708

INVERSE TRANSFORM

S1710

GENERATE
PREDICTION SIGNAL

S1711

GENERATE
REGENERATION SIGNAL

END

**INTERNATIONAL SEARCH REPORT**

| International application No. |
| --- |
| PCT/JP2010/062889 |

| A. CLASSIFICATION OF SUBJECT MATTER |
| --- |
| *H04N7/50*(2006.01)i |
| According to International Patent Classification (IPC) or to both national classification and IPC |

| B. FIELDS SEARCHED |
| --- |
| Minimum documentation searched (classification system followed by classification symbols) |
| H04N7/24-7/68 |

| Documentation searched other than minimum documentation to the extent that such documents are included in the fields searched |
| --- |
| Jitsuyo Shinan Koho      1922-1996   Jitsuyo Shinan Toroku Koho   1996-2010 |
| Kokai Jitsuyo Shinan Koho  1971-2010   Toroku Jitsuyo Shinan Koho   1994-2010 |

| Electronic data base consulted during the international search (name of data base and, where practicable, search terms used) |
| --- |
| |

### C. DOCUMENTS CONSIDERED TO BE RELEVANT

| Category* | Citation of document, with indication, where appropriate, of the relevant passages | Relevant to claim No. |
| --- | --- | --- |
| A | JP 2007-208543 A (Victor Company of Japan, Ltd.), 16 August 2007 (16.08.2007), entire text; all drawings (Family: none) | 1,2,4,5,7-10 |
| A | JP 2009-118233 A (KDDI Corp.), 28 May 2009 (28.05.2009), entire text; all drawings (Family: none) | 1,2,4,5,7-10 |
| A | JP 8-256266 A (Mitsubishi Electric Corp.), 01 October 1996 (01.10.1996), entire text; all drawings & US 5926574 A         & EP 827345 A1 | 1,2,4,5,7-10 |

☒ Further documents are listed in the continuation of Box C.      ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 18 October, 2010 (18.10.10) | 26 October, 2010 (26.10.10) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2010/062889 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 4-189092 A  (Victor Company of Japan, Ltd.), 07 July 1992 (07.07.1992), entire text; all drawings (Family: none) | 1,2,4,5,7-10 |
| A | JP 5-22715 A  (Sony Corp.), 29 January 1993 (29.01.1993), entire text; all drawings (Family: none) | 1,2,4,5,7-10 |

Form PCT/ISA/210 (continuation of second sheet) (July 2009)

# EP 2 472 872 A1

| INTERNATIONAL SEARCH REPORT | International application No. |
|---|---|
| | PCT/JP2010/062889 |

**Box No. II**    **Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III**    **Observations where unity of invention is lacking (Continuation of item 3 of first sheet)**

This International Searching Authority found multiple inventions in this international application, as follows:
See extra sheet.

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☒ No required additional search fees were timely paid by the applicant.   Consequently, this international search report is restricted to the invention first mentioned in the claims; it is covered by claims Nos.:
1, 2, 4, 5, 7 - 10

**Remark on Protest**        ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

<table>
<tr><td>**INTERNATIONAL SEARCH REPORT**</td><td>International application No.<br>PCT/JP2010/062889</td></tr>
</table>

Continuation of Box No.III of continuation of first sheet(2)

Although all the invention in claims 1 - 6 have such a matter as "evaluation unit for conversion coefficient", said matter cannot be considered to be a special technical feature since the matter is a well-known art in the technical field of encoding of images.

The inventions in claims 1, 2, 4, 5 have such a common special technical feature as "a mode restriction unit for restricting the range of a mode in accordance with an evaluation value".

The inventions in claims 1, 3, 4, 6 have such a common special technical feature as "a mode estimation unit for estimating a mode to be used in accordance with an evaluation value".

However, there is no special technical feature common to all of the inventions in claims 2, 3, 5, 6.

Therefore, there is also no special technical feature common to all of the inventions in claims 1 - 10.

Consequently, claims including dependent claims are classified into the following invention groups.

(Invention group 1) claims 1, 2, 4, 5, 7 - 10 (herein, claims 7 and 10 are to be dependent on any one of claims 1, 2, 4 and 5)
The inventions including "mode restriction unit for restricting the range of a mode in accordance with an evaluation value".

(Invention group 2) claims 3, 6, 7, 10 (herein, claims 7 and 10 are to be dependent on either claim 3 or claim 6)
The inventions including "mode estimation unit for estimating a mode to be used in accordance with an evaluation value".

Form PCT/ISA/210 (extra sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006211304 A

- JP 2003204550 A

**Non-patent literature cited in the description**

- **Ryuichi TANIDA.** A STUDY ON PREDICTION VECTOR DERIVATION ALGORITHM USING IMAGE MATCHING. *2008 IMAGE CODING SYMPOSIUM,* 5-10